# EUROPÄISCHE PATENTANMELDUNG

(11) **EP 4 306 595 A1**
(43) Veröffentlichungstag der Anmeldung: **17.01.2024**
(21) Anmeldenummer: 22182124.2
(22) Anmeldetag: 30.06.2022
(51) Int. Cl.: C08L 83/04, C08L 83/06

(54) **FEUCHTIGKEITS-UND RADIKALISCH HÄRTENDE SILIKONACRYLATZUSAMMENSETZUNG FÜR CURED-IN-PLACE GASKETING**

(71) Anmelder: Sika Technology AG, 6340 Baar (CH)
(72) Erfinder: Suter, Riccardo, 5400 Baden (CH); Storrer, Denise, 8048 Zürich (CH); Gatti, Michele, 5070 Frick (CH); Cannas, Rita, 8600 Dübendorf (CH); Battisti, Andrea, 8050 Zürich (CH)
(74) Vertreter: Sika Patent Attorneys

(57) **Zusammenfassung**

Beschrieben wird eine Feuchtigkeits- und radikalisch härtende Silikonacrylatzusammensetzung umfassend mindestens ein feuchtigkeits- und radikalisch vernetzbares Polydimethylsiloxan der allgemeinen Formel (I) 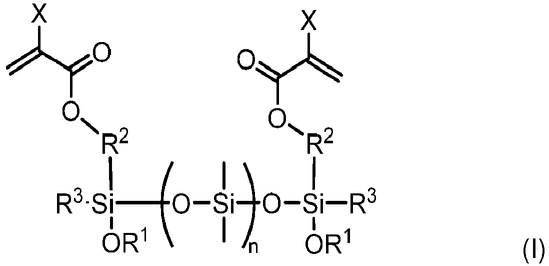 mindestens einen Radikal-Initiator, optional mindestens ein (Meth)acrylatmonomer, optional mindestens einen Silanvernetzer mit Alkoxysilangruppen, optional mindestens einen Kondensationskatalysator, optional Füllstoffe, sowie optional weitere Inhaltsstoffe, dadurch gekennzeichnet, dass Polydimethylsiloxan hergestellt ist aus der Kondensationsreaktion eines Polydimethylsiloxans mit Silanol-Endgruppen und mehr als zwei Äquivalenten Silan der Formel (II), bezogen auf die Silanol-Endgruppen, 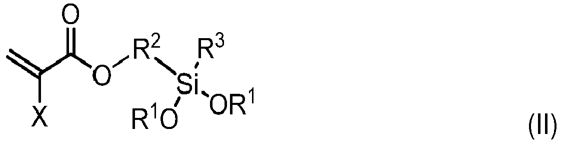 mit der Massgabe, dass für die Kondensationsreaktion zur Herstellung des Polydimethylsiloxans ein Katalysator verwendet wird, welcher ausgewählt ist aus Amidin- und Guanidinverbindungen.

Die einkomponentig formulierbare und maschinell applizierbare Zusammensetzung kann nach Applikation innert kürzester Zeit ausgehärtet werden und sich ideal als Cured-in-Place Gasket Material.

## Beschreibung

### Technisches Gebiet

Die Erfindung betrifft feuchtigkeits- und radikalisch härtende Silikonacrylatzusammensetzungen, deren Verwendung als Cured-in-Place Gasket, sowie Verfahren zur Herstellung einer Dichtung mittels einer Cured-in-Place Gasket-Methode.

### Stand der Technik

Silikone sind bekannte Zusammensetzungen, welche schon lange als Kleb- oder Dichtstoffe eingesetzt werden. Solche Silikone können als ein- oder zweikomponentige Silikonzusammensetzungen gestaltet werden und enthalten als Hauptkomponenten üblicherweise ein Polydiorganylsiloxan, einen Vernetzer und einen Katalysator. Es wird zwischen kaltvernetzenden RTV-Silikonen (RTV = raumtemperaturvernetzend bzw. -vulkanisierend) und warmvernetzenden HTV-Silikonen (HTV = hochtemperaturvernetzend bzw. - vulkanisierend) unterschieden. Ein- und zweikomponentige RTV-Silikone werden auch als RTV-1 Silikone bzw. RTV-2 Silikone bezeichnet.

Feuchtigkeitshärtende, kondensationsvernetzende RTV Silikone sind lange bekannt und werde breit eingesetzt. Ebenfalls bekannt ist, dass solche Zusammensetzungen auf Basis sogenannter neutraler Vernetzung aushärten können. Klassischerweise setzten neutral vernetzende RTV-1 Silikone Oximverbindungen frei, deren Geruch als sehr unangenehm empfunden wird und die aus Gründen des Gesundheitsschutzes immer weniger bevorzugt sind. Alternativ und mit wachsender Verbreitung können neutral vernetzende RTV-1 Silikone mit Alkoxygruppen-haltigen Polydiorganylsiloxanen bzw. Vernetzern formuliert werden. Neutral vernetzende RTV-2 Silikone basieren in der Regel auf Alkoxygruppen-haltigen Verbindungen. Spaltprodukte der Vernetzung dieser Alkoxysysteme sind dann Alkohole, die deutlich weniger unangenehm riechen und weniger gesundheitsschädlich sind.

Nachteilig an feuchtigkeitshärtenden, kondensationsvernetzenden Silikonen ist jedoch, dass sie relativ langsam aushärten, insbesondere wenn sie als einkomponentige Zusammensetzungen (RTV-1) formuliert werden. Meist muss das für die Hydrolyse und Kondensation benötigte Wasser in einkomponentigen Silikonen langsam aus der Umgebungsluft in die Zusammensetzung eindiffundieren, was den Aushärtungsprozess auf Stunden bis Tage verlangsamen kann. Aber auch die Kondensationsreaktionen selbst verlaufen relativ langsam. Selbst in hochkatalysierten, zweikomponentigen Systemen werden mindestens einige Minuten bis Stunden benötigt, bis die Zusammensetzung ausgehärtet ist, und bei so reaktiv eingestellten Zusammensetzungen wird die Applikation erschwert, da die Offenzeit nach dem Mischen der Reaktivkomponenten extrem kurz wird und die Applikation grösserer Mengen an Zusammensetzung damit zeitlich stark limitiert wird. Ein weiterer Nachteil von zweikomponentigen Systemen ist, dass die Vermischung der beiden Komponenten fehleranfällig ist und daher im Prozess laufend überwacht werden muss, insbesondere falls die beiden Komponenten über einen statischen Mischer gemischt werden. Zudem sind die technischen Anforderungen an ein Mehrkomponentenpumpsystem viel grösser als bei der Förderung einer einkomponentigen Zusammensetzung, und eine händische Applikation mit Mischung einer mehrkomponentiger Zusammensetzungen ist ebenfalls schwieriger.

Für gewisse Anwendungen ist dies eher unbefriedigend. Eine solche Anwendung sind sogenannte "Cured-in-Place Gaskets" (GIPG), also *in situ* hergestellte Dichtungen. Dabei handelt es sich um Dichtungsmaterialien, die als Flüssigkeit oder Paste aufgetragen und an Ort und Stelle ausgehärtet werden. So können auch komplexe Dichtungsgeometrien erreicht werden, die über herkömmliche Dichtungsringe nicht zugänglich sind, oder es können flexible Dichtungslösungen für Einzelstücke oder Kleinserien realisiert werden, für die eine vorgängige Herstellung von Dichtungsringen wegen der kleinen Stückzahl nicht wirtschaftlich wäre. Mit einer Cured-in-Place Gasket-Lösung können auch Dichtungen rasch erneuert werden, was bei Teilen, die häufig für Wartungs- oder Ersatzarbeiten geöffnet werden müssen, sehr vorteilhaft ist, wie beispielsweise bei Batterieboxen für Elektrofahrzeuge.

Solche Cured-in-Place Gasket Materialen müssen nach Applikation im flüssigen oder pastösen Zustand sehr schnell aushärten können. Dafür werden heutzutage schnell härtende kondensationsvernetzende Silikone, Polyurethane oder in jüngerer Zeit auch Urethanacrylat-Zusammensetzungen oder Zusammensetzungen auf Basis feuchtigkeitsvernetzender, Silan-terminierter organischer Polymere (STP) verwendet. Allerdings weisen diese bekannten Zusammensetzungen Nachteile auf. Kondensationsvernetzende Silikone sind wie oben beschrieben tendenziell eher langsam in der Aushärtung oder schwierig in der Anwendung, besonders bei langwierigen Applikationen. Polyurethane, Urethanacrylate und STP-basierte Zusammensetzungen dagegen weisen Schwächen bei der Hochtemperaturstabilität auf. Allen diese heute bekannten Systeme weisen zudem mangelhafte Druckverformungseigenschaften auf. Sie neigen nämlich dazu, unter Kompressionsdruck in einem bestimmten Ausmass irreversibel plastisch zu verformen und verlieren wesentliche Anteile ihres elastischen Rückstellvermögens. Gerade ein hohes elastisches Rückstellvermögen nach Wegfall des Kompressionsdrucks wäre jedoch beispielsweise bei Gasketing-Anwendungen wünschenswert, um eine lange Lebensdauer des Dichtmaterials unter wiederholter kompressiver Druckbelastung und -entspannung sicherzustellen. In diesem Bereich besteht nach wie vor das Bedürfnis nach einem Material mit besseren Druckverformungseigenschaften, bzw. einem höheren elastischen Rückstellvermögen nach Kompressionsbelastung. Weiterhin ist es oftmals nicht erwünscht, dass die Dichtungsmaterialien zu starke Haftung auf den Substraten aufbauen, sondern sie sollten idealerweise wie herkömmliche Dichtungsringe aus Gummi leicht entfernbar und ersetzbar sein. Dies ist beispielsweise bei Urethanacrylaten oft nicht möglich, da diese intrinsisch auf den oftmals aus Metall bestehenden Substraten starke Haftung aufbauen und bei einem Ersatz aufwändig herausgespachtelt werden müssen.

Es besteht daher ein Bedarf an Zusammensetzungen, die einfach herstellbar sind, zu elastischen, mechanisch und chemisch beständigen Formkörpern aushärten und sich insbesondere als Cured-in-Place Gasket mit hohem elastischen Rückstellvermögen nach Kompression eignen. Dafür sollen sie ohne Zeitdruck als niedrigviskose, maschinell applizierbare Flüssigkeit oder Paste ausgebracht werden können und danach innert kurzer Zeit, insbesondere innert Sekunden aushärten. Weiterhin sollen die Zusammensetzungen auch problemlos mit minimalen Adhäsionseigenschaften hergestellt werden können, damit sie bei Anwendung als Cured-in-Place Gasket leicht entfernt und ersetzt werden können.

### Darstellung der Erfindung

Aufgabe der vorliegenden Erfindung ist daher die Bereitstellung einer einkomponentig formulierbaren, in beliebiger Zeit maschinell applizierbaren Zusammensetzung, welche nach Applikation innert kürzester Zeit, insbesondere innert Sekunden, ausgehärtet werden kann und sich bezüglich ihrer mechanischen und elastischen Eigenschaften ideal als Cured-in-Place Gasket Material eignet, insbesondere als schwach haftendes, leicht wieder entfernbares Dichtungsmaterial. Die Zusammensetzung soll zudem aus leicht erhältlichen Rohstoffen einfach und kostengünstig herstellbar sein.

Es wurde überraschenderweise gefunden, dass (Meth)acrylat- und Alkoxysilan-funktionalisierte Polydimethylsiloxanpolymere, welche unter Verwendung spezieller Katalysatoren aus herkömmlichen Rohstoffen herstellbar sind, in Zusammensetzungen umfassend mindestens einen Radikal-Initiator und optionalen weitern Bestandteilen für die Lösung dieser Aufgabe geeignet sind. Die so erhaltenen Zusammensetzungen eignen sich hervorragend als Cured-in-Place Gasket und weisen in bevorzugten Ausführungsformen sowohl überraschend gute mechanische Eigenschaften wie Zugfestigkeit, Bruchdehnung und Elastizitätsmodul, als auch die erwünschte schwache Haftung für eine leichte Entfernung auf. Weiterhin überraschend verfügen diese Zusammensetzungen im ausgehärteten Zustand über ein hervorragendes Druckverformungsverhalten mit aussergewöhnlich hohem elastischen Rückstellvermögen nach Kompression, was sie zusätzlich besonders geeignet für Cured-in-Place Gasket-Anwendungen macht.

Demgemäss betrifft die Erfindung in einem ersten Aspekt eine feuchtigkeits- und radikalisch härtende Silikonacrylatzusammensetzung umfassend
a) mindestens ein feuchtigkeits- und radikalisch vernetzbares Polydimethylsiloxan **P** der allgemeinen Formel (I) 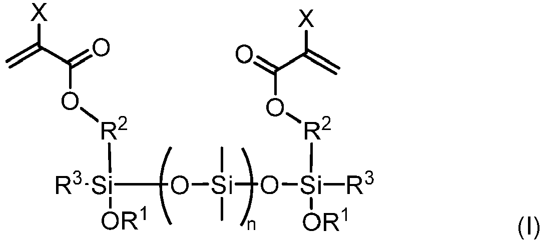 wobei R¹ unabhängig voneinander für Wasserstoff oder monovalente Kohlenwasserstoffgruppen mit 1-6 C-Atomen stehen; R² unabhängig voneinander für eine divalente Kohlenwasserstoffgruppe mit 1-6 C-Atomen stehen; R³ unabhängig voneinander für OR¹ oder Methyl stehen; X ein Wasserstoff oder eine Methylgruppe darstellt; und n so gewählt ist, dass das vernetzbare Polydiorganylsiloxan bei einer Temperatur von 25°C eine Viskosität von 10 bis 500'000 mPa·s besitzt,
b) mindestens einen Radikal-Initiator **I,**
c) optional mindestens ein (Meth)acrylatmonomer **M,**
d) optional mindestens einen Silanvernetzer **V** mit Alkoxysilangruppen,
e) optional mindestens einen Kondensationskatalysator **K,**
f) optional Füllstoffe **F,**
g) optional weitere Inhaltsstoffe, dadurch gekennzeichnet, dass Polydimethylsiloxan **P** hergestellt ist aus der Kondensationsreaktion eines Polydimethylsiloxans mit Silanol-Endgruppen und mehr als zwei Äquivalenten Silan der Formel (II), bezogen auf die Silanol-Endgruppen, 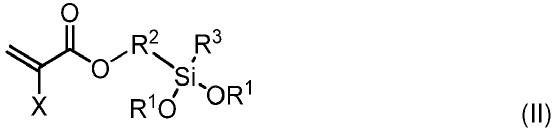 mit der Massgabe, dass für die Kondensationsreaktion zur Herstellung des Polydimethylsiloxans **P** ein Katalysator **C** verwendet wird, welcher ausgewählt ist aus Amidin- und Guanidinverbindungen.

Die erfindungsgemässe Silikonacrylatzusammensetzung eignet sich hervorragend als Cured-in-Place Gasket. Im Folgenden wird die Erfindung ausführlich erläutert.

### Wege zur Ausführung der Erfindung

Die hier angegebenen Viskositäten können gemäß DIN 53018 bestimmt werden. Die Messung kann mittels Kegel-Platte-Viskosimeter MCR101 der Firma Anton-Paar, Österreich, mit Kegel-Typ CP 25-1 bei 23°C erfolgen. Die angegebenen Viskositätswerte beziehen sich auf eine Scherrate von 0.89 s⁻¹.

Die Vernetzungsreaktion der Polydimethylsiloxane **P** umfasst radikalische Härtung über die (Meth)acrylat-Endgruppen sowie Hydrolyse- und Kondensationsreaktionen von Alkoxysilyl-Gruppen.

Die radikalische Vernetzung von (Meth)acrylatgruppen sind dem Fachmann bekannt. Diese Reaktionen erfolgen über den enthaltenen Radikal-Initiator **I,** der nach Aktivierung initiale Radikale bildet, beispielsweise durch Bildung von radikalischen Spaltprodukten unter Einfluss von UV/VIS-Licht oder durch thermische Aktivierung, welche dann über radikalische Kettenreaktionen die (Meth)Acrylatgruppen vernetzt. Diese Reaktion bilden den prinzipiellen Härtungsmechanismus. Daneben tragen die Polydimethylsiloxane **P** auch Alkoxysilangruppen, welche über Hydrolyse- und Kondensationsreaktionen zu Vernetzung führen. Dieser Mechanismus ist tendenziell langsamer und führt vor allem zu einer Nachhärtung in der erfindungsgemässen Zusammensetzung, vor allem an der Oberfläche der applizierten Zusammensetzung. Dadurch wird auch eine allfällig von den Acrylat-Bestandteilen unter Einfluss von Luft hervorgerufene Oberflächenklebrigkeit auf der radikalisch ausgehärteten Zusammensetzung beseitigt und damit in jedem Fall eine von herkömmlichen RTV Silikonen bekannte, glatte Oberfläche erhalten.

UV/VIS-Licht oder UV/VIS-Strahlung bezeichnet im vorliegenden Dokument Strahlung im Bereich des ultravioletten Spektrums (UV) und des sichtbaren Spektrums (VIS), insbesondere den Wellenlängenbereich zwischen 150 nm und 750 nm. Bevorzugte Wellenlängen für die Aktivierung der entsprechenden bevorzugten als Radikal-Initiator **I** eingesetzten Photoinitiatoren liegen im Bereich zwischen 300 nm um 600 nm, insbesondere zwischen 350 nm und 500 nm. Solche Wellenlängen ermöglichen in Kombination mit geeigneten Photoinitiatoren eine genügend rasche Aushärtung, wobei aber die Belastung durch möglicherweise schädigende, höherenergetische Strahlung gleichzeitig minimiert wird.

Diese Hydrolyse- und Kondensationsreaktionen sind dem Fachmann bekannt und können schematisch wie folgt dargestellt werden.

=Si-OR + H₂O → =Si-OH + ROH (a)

=Si-OH + HO-Si≡ → ≡Si-O-Si≡ + H₂O (b)

Bei Zutritt von Wasser und gegebenenfalls mithilfe eines Katalysators hydrolysieren Alkoxysilyl-Gruppen unter Bildung von Silanolen (Si-OH) und einem Alkohol (Schritt a). Die Silanole kondensieren, ebenfalls gegebenenfalls in Anwesenheit eines Katalysators, unter Bildung von Siloxanbindungen (-Si-O-Si-), so dass Siloxane gebildet werden (Schritt b). Sofern mehr als eine Alkoxygruppe pro Si-Atom vorliegt, können höher kondensierte Systeme gebildet werden. Bei teilweiser Hydrolyse wird nur ein Teil der Alkoxygruppen hydrolysiert und kondensiert. Die Reaktionsgeschwindigkeit der Vernetzungsreaktion hängt von der Kinetik der Teilschritte ab. Diese Kinetik kann z.B. in ¹H-NMR und ²⁹Si-NMR spektroskopischen Experimenten für Einzelkomponenten ermittelt werden, wie z.B. beschrieben in "Zeitschrift für Naturforschung (1999), 54b, 155-164" und "Phosphorus, Sulfur, and Silicone and the Related Elements (2011), 186(2), 240-254".

Die erfindungsgemässe Zusammensetzung enthält zunächst mindestens ein feuchtigkeits- und radikalisch vernetzbares Polydimethylsiloxan **P** der allgemeinen Formel (I) 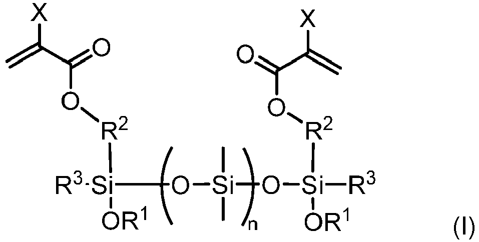 wobei R¹ unabhängig voneinander für Wasserstoff oder monovalente Kohlenwasserstoffgruppen mit 1-6 C-Atomen stehen; R² unabhängig voneinander für eine divalente Kohlenwasserstoffgruppe mit 1-6 C-Atomen stehen; R³ unabhängig voneinander für OR¹ oder Methyl stehen; X ein Wasserstoff oder eine Methylgruppe darstellt;
und n so gewählt ist, dass das vernetzbare Polydiorganylsiloxan bei einer Temperatur von 25°C eine Viskosität von 10 bis 500'000 mPa·s besitzt.

Polydimethylsiloxan **P** wird hergestellt aus der Kondensationsreaktion eines Polydimethylsiloxans mit Silanol-Endgruppen und mehr als zwei Äquivalenten Silan der Formel (II), bezogen auf die Silanol-Endgruppen, 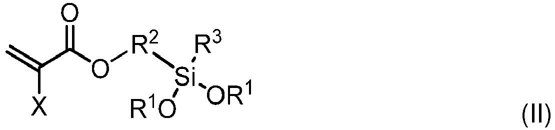 mit der Massgabe, dass für die Kondensationsreaktion zur Herstellung des Polydimethylsiloxans **P** ein Katalysator **C** verwendet wird, welcher ausgewählt ist aus Amidin- und Guanidinverbindungen.

Als Polydimethylsiloxane mit Silanol-Endgruppen für dieses Herstellverfahren eignen sich alle handelsüblichen α,ω-Dihydroxy(dimethysiloxane), wie sie in grosser Zahl als Basisrohstoffe für Silikonformulierungen käuflich erhältlich sind.

Die Viskosität der verwendeten Polydimethylsiloxane mit Silanol-Endgruppen kann in Abhängigkeit vom Einsatzzweck in breiten Bereichen variieren und hängt direkt von der Kettenlänge, also der Anzahl Siloxan-Repetiereinheiten (Index n in Formel (I)) zusammen.

Das erfindungsgemäss verwendete Polydimethylsiloxan nach Formel (I) kann bei einer Temperatur von 23 °C z.B. eine Viskosität von 10 bis 500'000 mPa s, bevorzugt von 5'000 bis 250'000 mPa s, besonders bevorzugt von 10'000 bis 150'000 mPa·s aufweisen.

Die Viskosität der eingesetzten Polydimethylsiloxane mit Silanol-Endgruppen weicht nur geringfügig von der Viskosität des daraus resultierenden Polydimethylsiloxans **P** nach Formel (I) ab, besonders wenn schon beim Polydimethylsiloxan mit Silanol-Endgruppen eine hohe Viskosität vorliegt.

Bevorzugt als Polydimethylsiloxan mit Silanol-Endgruppen für die Herstellung von Polydimethylsiloxan **P** nach Formel (I) ist beispielsweise Wacker^{®} Polymer FD 80 mit einer Viskosität bei einer Temperatur von 23 °C von 75`000 mPa·s. Ein solches Polymer ermöglicht gute mechanische Eigenschaften insbesondere für Cured-in-Place Gasketing.

Das Polydimethylsiloxan mit Silanol-Endgruppen wird mit mehr als zwei Äquivalenten Silan der Formel (II), bezogen auf die Silanol-Endgruppen, 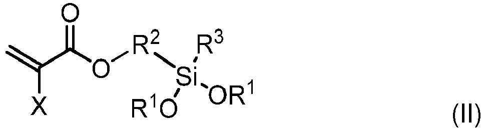 umgesetzt, in Gegenwart eines Katalysators **C**, wobei R¹ unabhängig voneinander für Wasserstoff oder monovalente Kohlenwasserstoffgruppen mit 1-6 C-Atomen stehen; R² unabhängig voneinander für eine divalente Kohlenwasserstoffgruppe mit 1-6 C-Atomen stehen; R³ unabhängig voneinander für OR¹ oder Methyl stehen; und X ein Wasserstoff oder eine Methylgruppe darstellt.

Bevorzugt steht R¹ in Formel (II) für eine Methyl- oder eine Ethylgruppe, insbesondere für eine Methylgruppe. Bevorzugt steht R² für eine Ethylen- oder eine Propylengruppe, insbesondere für eine Propylengruppe. Bevorzugt steht R³ für einen Rest OR¹, insbesondere für eine Methoxygruppe. X steht bevorzugt für ein Wasserstoffatom. Diese bevorzugten Ausführungsformen sind für sich allein bevorzugt, aber auch in beliebiger Kombination miteinander bevorzugt. Dieselben bevorzugten Ausführungsformen gelten selbstverständlich auch für R¹, R² und R³ im Polydimethylsiloxan **P** der Formel (I).

Besonders bevorzugte Silane nach Formel (II) sind (3-Acryloxypropyl)trimethoxysilan, (3-Acryloxypropyl)triethoxysilan, (3-Methacryloxypropyl)trimethoxysilan, sowie (3-Methacryloxypropyl)triethoxysilan. Davon besonders bevorzugt ist (3-Acryloxypropyl)trimethoxysilan.

Die Umsetzung von Polydimethylsiloxan mit Silanol-Endgruppen (genauer gesagt jeweils zwei Si-OH Gruppen pro Polydimethylsiloxan-Polymer) und Silan nach Formel (II) muss mit einem Überschuss (molarer Überschuss der Silane bezüglich der Silanol-Endgruppen) von mehr als 2 Äquivalenten Silan der Formel (II) durchgeführt werden, das bedeutet mehr als 4 mol Silan pro 1 mol Polydimethylsiloxan-Polymer mit Silanol-Endgruppen für die erfindungsgemässe Herstellung von Polydimethylsiloxan **P.**

Bevorzugt werden bei der Herstellung von Polydimethylsiloxan **P** mehr als 3 Äquivalente, bevorzugt zwischen 4 und 12 Äquivalente, insbesondere zwischen 5 und 8 Äquivalente des Silans nach Formel (II), bezogen auf die Silanol-Endgruppen, eingesetzt. Danach verbleibt das nicht umgesetzte, überschüssige Silan nach Formel (II) nach der Umsetzung bevorzugt als Silanvernetzter **V** in der Zusammensetzung.

Ein, insbesondere mindestens 4- bis 6-facher, Überschuss an Silan der Formel (II) führt nicht nur zu einem vollständigen Endcapping der Polydimethylsiloxane mit (Meth)acrylatendgruppen, sondern ermöglicht auch eine raschere Endcapping-Reaktion, welche z.B. bei Verwendung von mindestens 6 Äquivalenten Silan der Formel (II) nach weniger als einer Stunde vollständig ist.

Diese Reaktion wird durch einen Katalysator **C** katalysiert, welcher ausgewählt ist aus Amidin- und Guanidinverbindungen. Bevorzugt ist Katalysator **C** der einzige während der Reaktion zur Herstellung von Polydimethylsiloxan **P** der Formel (I) vorhandene Katalysator, der Hydrolyse und/oder Kondensation von Organoalkoxysilanen katalysieren kann. Weiterhin bevorzugt sind kein Alkalimetallsalz, keine Organometallverbindung und keine sauren Additive, insbesondere keine Phosphorsäureester während der Herstellung von Polydimethylsiloxan **P** zugegen, da diese Verbindungen die Endcappingreaktion möglicherweise unerwünscht beeinflussen, verhindern oder zumindest stören können.

Hinsichtlich Katalysator **C** bestehen keine besonderen Einschränkungen, ausser dass er mindestens eine Amidin- oder Guanidin-Gruppe aufweisen muss.

Geeignete Amidin- und Guanidin-basierte Katalysatoren **C** werden beispielsweise in WO 2016/166336, in WO 2018/172168, in WO 2016/207156 sowie in WO 2015/193208 beschrieben.

In einer bevorzugten Ausführungsform weist Katalysator **C** neben der Amidin- oder Guanidingruppe zusätzlich mindestens eine Alkoxysilangruppe auf, beispielsweise eine Triethoxysilangruppe oder eine Methyldiethoxysilangruppe. Solche Katalysatoren **C** sind in der Lage, sich über Silanhydrolyse und -kondensation in das Netzwerk des aushärtenden Polydimethylsiloxans **P** und gegebenenfalls vorhandenen Vernetzern **V** reaktiv einzubauen, was verhindert, dass diese Katalysatoren **C** oder Reaktionsprodukte davon später aus der Zusammensetzung hinausmigrieren können. Geeignete solche Katalysatoren sind beispielsweise in WO 2015/158864 A1 offenbart.

In anderen bevorzugten Ausführungsformen ist Katalysator **C** an einen Polymerrest gebunden, insbesondere einen Polydimethylsiloxan- oder Polyetherrest. Solche Katalysatoren **C** mit Polydimethylsiloxanrest sind gut mit der Zusammensetzung verträglich und haben eine besonders niedrige Tendenz zum Ausschwitzen aus der Zusammensetzung. Solche Katalysatoren **C** mit Polyetherrest hingegen führen zu besonders hoher Lagerstabilität der damit hergestellten Polymere **P.** Geeignete solche polymergebundene Katalysatoren **C** sind beispielsweise offenbart in WO 2017/102851 A1 und in WO 2015/158859 A1.

In einer bevorzugten Ausführungsform der Erfindung ist Katalysator **C** eine Guanidinverbindung, insbesondere ein Polyetherpolymer mit Guanidin-Endgruppen oder ein Polydimethylsiloxan mit Guanidin-Endgruppen. In Ausführungsformen bei denen Katalysator **C** eine Guanidinverbindung ist, sind Cyclohexyl- und Isopropylreste am Guandin besonders bevorzugt, insbesondere Isopropylreste. Isopropylreste am Guanidin führen zu hochaktiven Katalysatoren, die jedoch nicht zu Kristallisation neigen und damit bei Raumtemperatur flüssig vorliegen und besonders effizient in der Rektionsmischung zur Herstellung von Polydimethylsiloxan **P** eingemischt werden können.

Eine besonders bevorzugte Guanidinverbindung als Katalysator **C** ist in Formel (VI) dargestellt (1,1'-(α,ω-Polyoxypropylen)-bis(2,3-diisopropylguanidin), 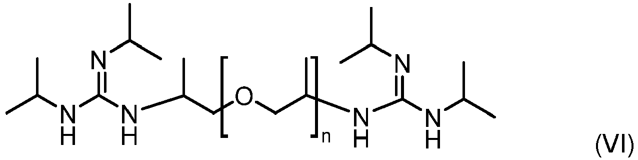 wobei Index n eine Zahl zwischen 1 und 10 darstellt, bevorzugt zwischen 2 und 7, insbesondere zwischen 3 und 6.

Ein solcher Katalysator **C** der Formel (VI) kann nach dem Verfahren aus WO 2015/158859 A1, Seite 42, Zeilen 8-20 hergestellt werden.

In besonders bevorzugten Ausführungsformen der feuchtigkeits- und radikalisch härtende Silikonacrylatzusammensetzung gemäss vorliegender Erfindung ist Katalysator **C** ein Amidin, insbesondere ein zyklisches Amidin, meist bevorzugt ein zyklisches Amidin, welches eine Alkoxysilangruppe aufweist.

Geeignete und leicht zugängliche zyklische Amidine sind insbesondere 1,8-Diazabicyclo[5.4.0]undec-7-en (DBU), 1,5-Diazabicyclo[4.3.0]non-5-en (DBN) und 1,5,7-Triazabicyclo[4.4.0]dec-5-en, wovon DBU bevorzugt ist.

Eine besonders bevorzugte Amidinverbindung als Katalysator **C** ist in Formel (VII) dargestellt, wobei R⁸ eine Methylgruppe oder eine Ethoxygruppe darstellt (1-(2-Hydroxy-3-(3-methyldiethoxysilylpropoxy)prop-1-yl)-2-methyl-1,4,5,6-tetrahydropyrimidin, bzw. 1-(2-Hydroxy-3-(3-triethoxysilylpropoxy)prop-1-yl)-2-methyl-1,4,5,6-tetrahydropyrimidin). Ein solches Amidin hat gegenüber DBU und anderen polyzyklischen Amidinen den Vorteil, dass das erhaltene Polydimethylsiloxan **P** noch lagerstabiler ist.

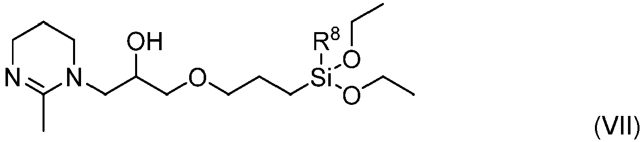

Nach der Endcapping-Reaktion der endständigen Silanole der Polydimethylsiloxane mit Silanol-Endgruppen mit Silan der Formel (II) zur Herstellung von Polydimethylsiloxan **P** ist keine besondere Aufarbeitung nötig. Katalysator **C** kann in der Reaktionsmischung verbleiben und wird normalerweise später, bei Compoundierung der Zusammensetzung, oftmals durch insbesondere leicht basische oder saure Formulierungsbestandteile wie Füllstoffe, insbesondere Kieselsäuren, von selbst deaktiviert.

Polydimethylsiloxan **P** auf diese Weise hergestellt kann problemlos insbesondere unter Luft- und Lichtausschluss zwischengelagert werden und kann jederzeit für die Herstellung (Formulierung) der erfindungsgemässen Zusammensetzung weiterverwendet werden.

Die erfindungsgemässe feuchtigkeits- und radikalisch härtende Silikonacrylatzusammensetzung enthält Polydimethylsiloxan **P** bevorzugt in einer Menge von zwischen 40 Gew.-% und 90 Gew.-%, insbesondere zwischen 50 Gew.-% und 75 Gew.-%, bezogen auf die gesamte Zusammensetzung.

Die erfindungsgemässe feuchtigkeits- und radikalisch härtende Silikonacrylatzusammensetzung enthält weiterhin mindestens einen Radikal-Initiator **I.**

Dieser Radikal-Initiator **I** wird benötigt, um die radikalische Härtung, bzw. Vernetzung des Polydimethylsiloxans **P** und allfällig weiter vorhandener radikalisch reaktiver Substanzen wie (Meth)acrylatmonomer **M** zu ermöglichen.

Radikalinitiatoren sind dem Fachmann auf dem Gebiet der reaktiven (Meth)acrylatzusammensetzungen bekannt. Für die vorliegende Erfindung sind prinzipiell alle gängigen Radikal-Initiatoren als Radikal-Initiator **I** geeignet, die für die radikalische Aushärtung von (Meth)acrylatzusammensetzungen geeignet sind. Es ist jedoch vorteilhafterweise darauf zu achten, dass die Radikal-Initiatoren gut mit der jeweiligen Silikonacrylatzusammensetzung mischbar sind.Zusammensetzungen die vorwiegend aus Silikonbestandteilen bestehen, also kein oder nur wenig (Meth)acrylatmonomer **M** und andere polare Substanzen enthalten, können eine niedrige Kompatibilität mit einigen Radikal-Initiatoren aufweisen, was die radikalische Reaktion verlangsamen oder beeinträchtigen kann. Aus diesem Grund sind wärmeaktivierbare Peroxid-Initiatoren nicht bevorzugt, da sie generell eher schlecht mit Silikonzusammensetzungen mischbar sind. Allgemein sind wärmeaktivierbare Radikal-Initiatoren nicht bevorzugt, da diese in einkomponentigen Zusammensetzung oft ungenügende Lagerstabilität zeigen.

Gängige photoaktivierbare UV/VIS-Initiatoren sind jedoch generell gut mischbar mit Silikonzusammensetzungen und können üblicherweise ohne Einschränkung verwendet werden.

In besonders bevorzugten Ausführungsformen der feuchtigkeits- und radikalisch härtende Silikonacrylatzusammensetzung gemäss vorliegender Erfindung ist der Radikal-Initiator **I** ein UV/VIS-aktivierbarer Photoinitiator, also ein Photoinitiator, der durch Licht im ultravioletten (UV) oder sichtbaren Spektrum (VIS) aktiviert wird. Ein UV/VIS-aktivierbarer Photoinitiator ermöglicht die Bildung von Radikalen und folglich eine Aushärtung der erfindungsgemässen Zusammensetzung durch die kurzzeitige Bestrahlung mit UV/VIS-Licht geeigneter Wellenlänge. Der Vorteil der Nutzung eines UV/VISaktivierbaren Photoinitiators ist die extrem schnelle Aushärtung nach sehr kurzer Bestrahlung, meist im Sekundenbereich, ohne die Notwendigkeit einer Wärmezufuhr. UV-Strahlenquellen sind kostengünstig und können flexibel eingesetzt werden. Im sichtbaren Spektrum aktivierbare Photoinitiatoren können auch durch Sonnenlicht oder eine Strahlenquelle niedrigerer Energie aktiviert werden (insbesondere blaue LEDs), was in einigen Anwendungen vorteilhaft sein kann. Als Radikal-Initiator **I** geeignete Photoinitiatoren sind unter anderem Aldehyde und deren substituierte Derivate, Ketone und deren substituierte Derivate, Chinine und deren substituierte Derivate; Thioxanthone, wie 2-Isopropylthioxanthon und 2-Dodecylthioxanthon, und bestimmte chromophorsubstituierte Vinylhalogenmethylsymtriazine, wie 2-4-Bis-(trichlormethyl)-6-(3',4'-dimethoxyphenyl)-sym-triazin und Acyl phosphinoxide, wie 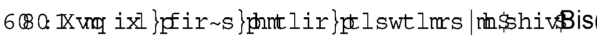 (2,4,6-trimethylbenzoyl)-phenylphosphinoxid2
Ebenfalls geeignet als Photoinitiatoren sind Acylgermane, wie beispielsweise in EP1905413A1 offenbart.

In bevorzugten Ausführungsformen umfasst Radikal-Initiator **I** ein Acylphosphinoxid, bevorzugt Bis(2,4,6-trimethylbenzoyl)-phenylphosphinoxid.

Spezifische Beispiele für als Radikal-Initiator **I** geeignete Photoinitiatoren, welche im UV- und/oder VIS Bereich aktivierbar sind, sind Bis(2,4,6-trimethylbenzoyl)-phenylphosphinoxid / 2-Hydroxy-2-methyl-1-phenyl-propan-1-on (erhältlich als IGM Resins OMNIRAD^{®} 2022), 2,4,6-Trimethylbenzoyldiphenylphosphinoxid (erhältlich als BASF LUCIRIN^{®} TPO), 2,4,6-Trimethylbenzoylethoxyphenylphosphinoxid (erhältlich als BASF LUCIRIN^{®} TPO-L), Bis(2,4,6-trimethylbenzoyl)-phenylphosphinoxid (erhältlich als Ciba IRGACURE^{®} 819) und andere Acylphosphine; 2-Methyl-1-(4-methylthio)phenyl-2-(4-morphorlinyl)-1-propanon (erhältlich als Ciba IRGACURE^{®} 907) und 1-(4-(2-Hydroxyethoxy)phenyl)-2-hydroxy-2-methylpropan-1-on (erhältlich als Ciba IRGACURE^{®} 2959); 2-Benzyl-2-dimethylamino 1-(4-morpholinophenyl)butanon-1 (erhältlich als Ciba IRGACURE^{®} 369); 2-Hydroxy-1-(4-(4-(2-Hydroxy-2-methylpropionyl)-benzyl)-phenyl)-2-methylpropan-1-on (erhältlich als Ciba IRGACURE^{®} 127); 2-Dimethylamino-2-(4-methylbenzyl)-1-(4-morpholin-4-ylphenyl)-butanon (erhältlich als Ciba IRGACURE^{®} 379); Titanocene; Isopropylthioxanthon; 1-Hydroxy-cyclohexylphenylketon; Benzophenon; 2,4,6-Trimethylbenzophenon; 4-Methylbenzophenon; Diphenyl-(2,4,6-trimethylbenzoyl)phosphinoxid; 2,4,6-Trimethylbenzoylphenylphosphinsäureethylester; Oligo(2-Hydroxy-2-methyl-1-(4-(1-methylvinyl)phenyl)propanon); 2-Hydroxy-2-methyl-1-phenyl-1-propanon; Benzyl-Dimethylketal; und Mischungen davon.

Weitere Beispiele für radikalische, UV/VIS-aktivierbare Photoinitiatoren sind 2,2-Dimethyl-2-hydroxy-acetophenon; 1-Hydroxy-1-cyclohexyl-phenylketon; 2,2-Dimethoxy-2-phenylacetophenon; 2,4,6-Trimethylbenzyl-diphenylphosphinoxid; Benzophenon; Mischungen aus Bis(2,6-dimethoxybenzoyl)-2,4,4-trimethylpentylphosphinoxid und 1-Phenyl-2-hydroxy-2-methylpropanon; Mischungen aus Bis(2,6-dimethoxybenzoyl)-2,4,4-trimethylpentylphosphinoxid und 1-Hydroxycyclohexylphenylketon; Bis(2,4,6-trimethylbenzoyl)-phenylphosphinoxid; und Campherchinon. Beispiele für kationische Photoinitiatoren sind Iodonium- und Sulfoniumsalze. Zu den bevorzugten Photoinitiatoren gehören 2-Benzyl-2-dimethylamino-1-(4-morpholinophenyl)-butan-1-on und/oder 2-Methyl-1-(4-(methylthio)phenyl)-2-morpholino-propan-1-on.

Ein meist bevorzugter Photoinitiator als Radikal-Initiator **I** ist Bis(2,4,6-trimethylbenzoyl)-phenylphosphinoxid.

Die erfindungsgemässe feuchtigkeits- und radikalisch härtende Silikonacrylatzusammensetzung enthält Radikal-Initiator **I** bevorzugt in einer Menge von zwischen 0.1 Gew.-% und 2.5 Gew.-%, insbesondere zwischen 0.2 Gew.-% und 1.5 Gew.-%, bezogen auf die gesamte Zusammensetzung.

Die erfindungsgemässe Zusammensetzung enthält weiterhin bevorzugt mindestens ein (Meth)acrylatmonomer **M.**

Als (Meth)acrylatmonomer **M** geeignet sind alle gängigen, über mindestens eine radikalisch polymerisierbare (Meth)acrylatgruppe verfügenden Monomere, die dem Fachmann auf dem Gebiet der radikalisch härtenden (Meth)acrylatzusammensetzungen bekannt sind. Der Begriff «(Meth)acrylatgruppe» umfasst sowohl Acrylatgruppen wie Methacrylatgruppen.

Bevorzugt als (Meth)acrylatmonomer **M** sind Monomere, die gut mit Silikonzusammensetzungen mischbar sind. Das sind vor allem (Meth)acrylatmonomere mit aliphatischen Alkylresten. (Meth)acrylatmonomer **M** kann auch funktionelle Gruppen mit Heteroatomen aufweisen, wie beispielsweise Hydroxylgruppen, Thiolgruppen, oder Silangruppen. Vorzugsweise besitzt das (Meth)acrylatmonomer **M** bis zu etwa 20 Kohlenstoffatome, wie z. B. 2-Ethylhexylacrylat, Methylacrylat, Methylmethacrylat, Ethylacrylat, Ethylmethacrylat, Butylacrylat, Butylmethacrylat, Isobutylacrylat, Isobutylmethacrylat, n-Hexylacrylat, n-Hexylmethacrylat, Ethylhexylacrylat, Ethylhexylmethacrylat, n-Heptylacrylat, n-Heptylmethacrylat, 2-Methylheptyl(meth)acrylat, Octylacrylat, Octylmethacrylat, Isooctyl(meth)acrylat, n-Nonyl(meth)acrylat, Isononyl(meth)acrylat, Decyl(meth)acrylat, Isodecylacrylat, Isodecylmethacrylat, Dodecyl(meth)acrylat, Isobornyl(meth)acrylat, Hydroxyethylmethacrylat, Hydroxyethylacrylat, Allylmethacrylat, Cyclohexylmethacrylat, Cyclohexylacrylat, n-Hexylacrylat, n-Hexylmethacrylat, Isobornylacrylat, Isobornylmethacrylat und dergleichen. Besonders bevorzugt als (Meth)acrylatmonomer **M** sind die (Meth)acrylatmonomere Isobornyl(meth)acrylat, Tridecylacrylat und 2-Ethylhexylacrylat.

Weiterhin eignen sich als (Meth)acrylatmonomer **M** vernetzende, multifunktionelle Monomere wie beispielsweise Allyl(meth)acrylat oder vernetzende di- oder multifunktionelle (Meth)acrylate wie beispielsweise oligomere oder polymere Verbindungen der Formel (VII).

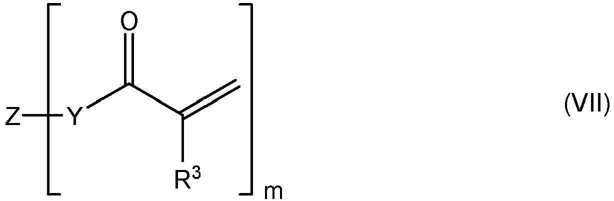

Der Rest R³ steht dabei für ein Wasserstoffatom oder für eine Methylgruppe. Der Index m steht für einen Wert von 2 bis 5. Weiterhin steht Z für ein Polyol nach Entfernung von n Hydroxylgruppen und Y steht für O oder für NR', wobei R' für einen Kohlenwasserstoffrest oder für ein Wasserstoffatom, bevorzugt für ein Wasserstoffatom, steht.

Die Verbindung der Formel (VII) ist insbesondere ausgewählt aus der Gruppe bestehend aus Ethylenglykoldi(meth)acrylat, 1,3- und 1,4-Butandioldi(meth)-acrylat, 1,6-Hexandioldi(meth)acrylat, ethoxyliertem und propoxyliertem Neopentylglykoldi(meth)acrylat, propoxyliertem Glyceryltri(meth)acrylat, Trimethylolpropantri(meth)acrylat, Trimethylolpropandi(meth)acrylat, ethoxyliertem Trimethylolpropantri(meth)acrylat, modifiziertem Pentaerythritoltri(meth)acrylat, propoxyliertem ethoxyliertem Pentaerythritoltetra(meth)acrylat, Ditrimethylolpropantetra(meth)acrylat und Dipentaerythritolpenta(meth)acrylat.

Auch allfällig vorhandenes, überschüssiges Silan der Formel (II), welches eine (Meth)acrylatgruppe aufweist, zählt zum (Meth)acrylatmonomer **M.**

Die erfindungsgemässe feuchtigkeits- und radikalisch härtende Silikonacrylatzusammensetzung enthält (Meth)acrylatmonomer **M** bevorzugt in einer Menge von zwischen 1 Gew.-% und 70 Gew.-%, insbesondere zwischen 5 Gew.-% und 50 Gew.-%, bevorzugt zwischen 10 Gew.-% und 25 Gew.-%, bezogen auf die gesamte Zusammensetzung.

Höhere Anteile an (Meth)acrylatmonomer **M** können die mechanischen Eigenschaften wie beispielsweise Bruchdehnung und Zugfestigkeit, sowie die Adhäsion auf vielen Substraten verbessern. Allerdings reduzieren höhere Anteile an (Meth)acrylatmonomer **M** in einigen Fällen die Transparenz der Zusammensetzung, was die Aushärtung mittels UV/VIS-Aktivierung erschwerden kann. In Anwendungen, wo Adhäsion eher niedrig sein soll, wie beispielsweise Cured-in-Place Gasket-Anwendungen, ist es bevorzugt wenn ausser überschüssiges Silan der Formel (II) keine oder nur geringe Anteile, z.B. weniger als 5 Gew.-%, bezogen auf die gesamte Zusammensetzung, an zusätzlichem (Meth)acrylatmonomer **M** der Zusammensetzung hinzugefügt werden.

In besonders bevorzugten Ausführungsformen der erfindungsgemässen feuchtigkeits- und radikalisch härtende Silikonacrylatzusammensetzung enthält die Zusammensetzung zusätzlich ein Polydimethylsiloxan der Formel (III), 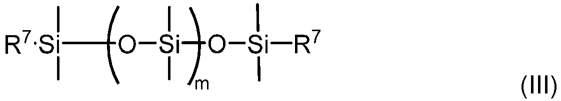 wobei R⁷ ausgewählt ist aus C6 bis C20 Alkylresten mit mindestens einem Ethersauerstoff in der Kette, die optional eine Hydroxylgruppe aufweist und mindestens eine Acrylatgruppe am Kettenende trägt, wobei m so gewählt ist, dass das Polydimethylsiloxan nach Formel (III) bei einer Temperatur von 25°C eine Viskosität von 25 bis 2`500 mPa·s besitzt.

In einer besonders bevorzugten Ausführungsform ist Rest R⁷ ausgewählt aus -(CH₂)₃-O-CH₂-CH(OH)-CH₂-O-(C=O)-CH=CH₂. Solche Polydimethylsiloxane sind beispielsweise erhältlich unter den Handelsnamen Silmer^{®} OH ACR Di-50, Silmer^{®} OH ACR Di-100, sowie Silmer^{®} OH ACR Di-400 von Siltech.

In einer weiteren besonders bevorzugten Ausführungsform ist Rest R⁷ ausgewählt aus -(CH₂)₃-(O-CH₂-CH₂)_{c}-(O-CH₂-CH₂(CH₃)_{d}-O-(C=O)-CH=CH₂ , wobei Indices c und d unabhängig voneinander einen Wert zwischen 0 und 3 darstellen, mit der Massgabe, dass die Summe von c + d zwischen 1 und 5 liegt. Solche Polydimethylsiloxane sind beispielsweise erhältlich unter den Handelsnamen Silmer^{®} ACR Di-10, Silmer^{®} ACR Di-50, Silmer^{®} ACR Di-100, sowie Silmer^{®} ACR Di-400 von Siltech.

Weiter besonders bevorzugt sind Polydimethylsiloxane der Formel (III) bei denen R⁷ ein Alkylrest mit zwei Acrylatgruppen darstellt, insbesondere ein Trimethylolpropanpropanrest mit zwei über die Sauerstoffatome gebundene Acrylatgruppen. Solche Polydimethylsiloxane sind beispielsweise erhältlich unter den Handelsnamen Silmer^{®} ACRT Di-5, Silmer^{®} ACRT Di-10, Silmer^{®} ACRT Di-25, sowie Silmer^{®} ACRT Di-100 von Siltech.

Die Verwendung von Polydimethylsiloxan der Formel (III) in der erfindungsgemässen Zusammensetzung ermöglicht besonders vorteilhafte mechanische Eigenschaften, insbesondere eine Verbesserung der Zugfestigkeit und gleichzeitig der Bruchdehnung, ohne jedoch die Adhäsionseigenschaften zu beeinflussen. Damit können besonders gut für Cured-in-Place Gasket-Anwendungen geeignete Materialien hergestellt werden.

Die erfindungsgemässe feuchtigkeits- und radikalisch härtende Silikonacrylatzusammensetzung enthält Polydimethylsiloxan der Formel (III) bevorzugt in einer Menge von zwischen 1 Gew.-% und 25 Gew.-%, insbesondere zwischen 5 Gew.-% und 20 Gew.-%, bevorzugt zwischen 10 Gew.-% und 15 Gew.-%, bezogen auf die gesamte Zusammensetzung.

Die erfindungsgemässe Zusammensetzung umfasst ferner optional in einigen Ausführungsformen mindestens einen Silanvernetzer **V** mit Alkoxysilangruppen. Dabei handelt es sich um übliche Vernetzter, wie sie in Silikonformulierungen eingesetzt werden und dem Fachmann bestens bekannt sind.

Als Silanvernetzer **V** geeignete Vernetzer entsprechen der allgemeinen Formel (IV)

R⁴ₘSiX₄₋ₘ (IV)

wobei R⁴ unabhängig voneinander ein nicht hydrolysierbarer einwertiger Kohlenwasserstoffrest mit 1 bis 18 C-Atomen, welcher gesättigt oder ungesättigt ist und gegebenenfalls eine oder mehrere funktionelle Gruppen enthaltend die Elemente F, N, P, O und/oder S aufweist, ist, m gleich 0, 1, 2 oder 3 ist, bevorzugt 0 oder 1, X unabhängig voneinander eine OH-Gruppe, eine lineare oder verzweigte Alkoxy-Gruppen mit 1 bis 8 C-Atomen, welche gegebenenfalls durch F, N, P, O und/oder S substituiert sein kann und gegebenenfalls ungesättigte und/oder cycloaliphatische und/oder aromatische Anteile aufweist oder eine Gruppe der allgemeinen Formel (V) ist

N(SiR⁴ₘ)ₒ(R⁵)ₚ(R⁶)_{q} (V)

wobei R⁴ und m die oben angegebene Bedeutungen haben, R⁵ ein Wasserstoffatom oder eine monovalente Kohlenwasserstoffgruppe mit 1 bis 8 C-Atomen und R⁶ eine Acylgruppe mit 1 bis 9 C-Atomen ist, und o, p, q gleich 0, 1 oder 2 sind, mit der Massgabe, dass o + p + q = 2.

Sofern X in Formel (IV) für eine Alkoxy-Gruppe steht, sind Alkoxy-Gruppen X unabhängig voneinander Alkoxy-Gruppen mit 1 bis 8 C-Atomen, welche gegebenenfalls durch F, N, P, O und/oder S substituiert sein können und gegebenenfalls ungesättigte und/oder cycloaliphatische und/oder aromatische Anteile aufweisen. Die Alkoxy-Gruppen X können beispielsweise unabhängig voneinander ausgewählt sein aus einer oder mehrerer der Gruppen Methoxy, Ethoxy, n-Propoxy, i-Propoxy, n-Butoxy, i-Butoxy, n-Pentoxy, i-Pentoxy, n-Hexoxy, i-Hexoxy, n-Heptoxy, i-Heptoxy, n-Octoxy, i-Octoxy, Cyclopentoxy, Cylcohexoxy, Phenoxy, Vinyloxy, Allyloxy, Methoxymethoxy, 2-Methoxyethoxy, Ethoxymethoxy, 2-(2-Methoxyethoxy)ethoxy, Trifluorpropoxy, 2-Aminoethoxy, 6-Aminohexoxy.

Bevorzugt sind die Alkoxy-Gruppen X unabhängig voneinander ausgewählt aus Alkoxy-Gruppen mit 1 bis 6, insbesondere mit 1 bis 3, C-Atomen, wie Propoxy, Ethoxy und Methoxy, wobei Ethoxy besonders bevorzugt ist.

In einer besonderen Ausführungsform sind alle Gruppen X gleich und ausgewählt aus Alkoxy-Gruppen mit 1 bis 6, insbesondere mit 1 bis 3, C-Atomen, wie Propoxy, Ethoxy und Methoxy, wobei Ethoxy besonders bevorzugt ist.

Sofern X in Formel (IV) für eine Gruppe der allgemeinen Formel (V) steht, haben R⁴ und m die oben angegebene Bedeutung und sind die R⁵ unabhängig voneinander ein Wasserstoffatom oder eine monovalente Kohlenwasserstoffgruppe mit 1 bis 8 C-Atomen, bevorzugt eine lineare Kohlenwasserstoffgruppe mit 1 bis 4 C-Atomen, besonders bevorzugt Methyl, und sind die R⁶ unabhängig voneinander eine Acylgruppe mit 1 bis 9 C-Atomen, insbesondere eine Acetyl-Gruppe und/oder eine Benzoyl-Gruppe und sind o, p, q gleich 0, 1 oder 2, mit der Massgabe, dass o + p + q = 2 ist.

Beispiele für Silanvernetzer **V** der allgemeinen Formel (IV) sind Methyltrimethoxysilan, Dimethyldimethoxysilan, Ethyltrimethoxysilan, Propyltrimethoxysilan, i-Butyltrimethoxysilan, Octyltrimethoxysilan, Hexadecyltrimethoxysilan, Vinyltrimethoxysilan, Vinyltris(2-methoxyethoxy)silan, Vinyldimethoxymethylsilan, Phenyltrimethoxysilan, Tetramethylorthosilikat, 3-Mercaptopropyltrimethoxysilan, 3-Aminopropyltrimethoxysilan, 3-Glycidoxypropyltrimethoxysilan, 2-Aminoethyl-3-aminopropyltrimethoxysilan, (Trimethoxysilyl)methyl-O-methylcarbamat, N-(Trimethoxysilyl)methyl)methacrylamid, N-(Trimethoxysilyl)methyl)cyclohexanamin, N,N`-(Methoxy(methyl)silandiyl)dibenzamid und die entsprechenden Verbindungen, bei denen alle Methoxygruppen entweder durch Ethoxygruppen oder durch Propoxygruppen ersetzt sind, also z.B. Methyltriethoxysilan usw.

3-Methacryloxypropyltrimethoxysilan und andere (Meth)acrylat-funktionelle Silane werden jedoch, um Missverständnisse zu vermeiden, in diesem Dokument nicht zu Silanvernetzer **V**, sondern zu (Meth)acrylatmonomer **M** gezählt.

In einer bevorzugten Ausführungsform der Erfindung sind alle Gruppen X in Formel (IV) Alkoxy-Gruppen, besonders bevorzugt Methoxy- und/oder EthoxyGruppen.

Silanvernetzer **V**, insbesondere die der allgemeinen Formel (IV), können ganz oder teilweise hydrolysiert und/oder zu Siloxan-Oligomeren kondensiert vorliegen. Solche kondensierten Siloxane können aus einem oder mehreren verschiedenen Vernetzern der allgemeinen Formel (IV) hergestellt werden. Bei dem Siloxan handelt es sich somit bevorzugt um ein Alkoxygruppen enthaltendes Kondensationsprodukt der monomeren Alkoxysilane der allgemein Formel (IV).

Es können Mono-, Di-, Tri- oder Tetraalkoxysilane oder Mischungen davon für die teilweise Hydrolyse und Kondensation eingesetzt werden, wobei mindestens ein Alkoxysilan ein Tri- oder Tetraalkoxysilan ist. In Abhängigkeit von den eingesetzten Alkoxysilanen und der Reaktionsführung, insbesondere der zugegebenen Menge an Wasser, kann der Kondensationsgrad und der Anteil der im gebildeten Siloxan verbleibenden Alkoxygruppen eingestellt werden, wobei der mittlere Kondensationsgrad des Siloxans mindestens 4 ist. Das Siloxan kann aus linearen und/oder verzweigten Ketten, Ringen oder Käfigen bestehen. Dem Fachmann ist klar, dass meist Mischungen solcher Strukturelemente vorliegen. Die Alkoxysilane können am Si-Atom gebundene nicht hydrolysierbare Gruppen, insbesondere einwertige Kohlenwasserstoffreste, die gegebenenfalls eine oder mehrere funktionelle Gruppen aufweisen, aufweisen, die im gebildeten Siloxan verbleiben. Der als Nebenprodukt gebildete Alkohol kann entfernt werden, z.B. durch Abdampfen im Vakuum. Daraus gebildete Alkoxygruppen enthaltende Siloxane sind bekannt und im Handel erhältlich.

Daneben können auch zusätzlich Monoalkoxysilane und/oder Dialkoxysilane zur Herstellung des Alkoxygruppen enthaltenden Siloxans mit verwendet werden. Beispiele sind Trimethylmethoxysilan, Triethylmethoxysilan, Triphenylmethoxysilan, Dimethyldimethoxysilan, Diethyldimethoxysilan und Diphenyldimethoxysilan und die entsprechenden Silane, in denen alle Methoxygruppen entweder durch Ethoxygruppen oder Propoxygruppen ersetzt sind. Die Monoalkoxysilane und/oder Dialkoxysilane können z.B. eingesetzt werden, um den Kondensationsgrad oder die Verzweigung des gebildeten Siloxans einzustellen.

Bevorzugte Tri- oder Tetraalkoxysilane, die zur Herstellung des Alkoxygruppen enthaltenden Siloxans eingesetzt werden, sind Methyltrimethoxysilan, Methyltriethoxysilan, Vinyltrimethoxysilan, Vinyltriethoxysilan, n-Propyltrimethoxysilan, n-Propyltriethoxysilan, Phenyltrimethoxysilan, Phenyltriethoxysilan, 2-Aminoethyl-3-aminopropyltrimethoxysilan, 2-Aminoethyl-3-aminopropyltriethoxysilan, 3-Glycidoxypropyltrimethoxysilan, 3-Glycidoxypropyltriethoxysilan, 3-Mercaptopropyltrimethoxysilan, 3-Mercaptopropyltriethoxysilan, Tetraethoxysilan, Tetramethoxysilan, und Mischungen davon.

Allgemein spielen Silanvernetzer **V** in der Aushärtung der erfindungsgemässen Zusammensetzung eine sekundäre Rolle und müssen nicht zwingend enthalten sein. Das Polydimethylsiloxan **P,** welches (Meth)acrylatgruppen und Alkoxysilangruppen trägt, härtet zunächst über die (Meth)acrylatgruppen radikalisch aus. Die Alkoxysilangruppen führen generell zu einer späteren, langsameren Nachhärtung, welche z.B. die mechanischen Eigenschaften, die Adhäsion auf Substraten und/oder die Oberflächenbeschaffenheit der gehärteten Zusammensetzung verbessern kann. Für diese Silan-Reaktionen sind Silanvernetzer **V** nicht zwingend nötig, können aber hilfreich sein, indem sie die Reaktion beschleunigen oder die resultierenden Eigenschaften des ausgehärteten Materials verbessern, insbesondere eine allfällig vorhandene Oberflächenklebrigkeit beseitigen. Insbesondere in Fällen, wo starke Adhäsion auf Substraten aufgebaut werden soll, kann der Einsatz von Adhäsions-vermittelnden Silanen sinnvoll sein. Solche Adhäsions-vermittelnden Silane tragen z.B. Amino- oder Epoxygruppen und sind dem Fachmann bekannt, beispielsweise 3-Aminopropyltrimethoxysilan, 3-Glycidoxypropyltrimethoxysilan und 2-Aminoethyl-3-aminopropyltrimethoxysilan. Für eine Anwendung als Cured-in-Place Gasket, wo eine starke Adhäsion eher störend wäre, sind solche Adhäsions-vermittelnden Silanvernetzer **V** jedoch nicht immer empfehlenswert. Zudem verläuft der Haftungsaufbau über Silane sehr viel langsamer als die radikalische Aushärtung der Zusammensetzung. Um dies mindestens teilweise zu kompensieren, kann es vorteilhaft sein, einen Kondensationskatalysator **K** für die Kondensation von Silanen und Silanolen einzusetzen, auch wenn dies die Lagerstabilität der Zusammensetzung beeinträchtigen kann.

Die erfindungsgemässe feuchtigkeits- und radikalisch härtende Silikonacrylatzusammensetzung enthält Silanvernetzer **V,** insbesondere solche nach Formel (IV), bevorzugt in einer Menge von zwischen 0.1 Gew.-% und 5 Gew.-%, insbesondere zwischen 0.25 Gew.-% und 2.5 Gew.-%, bevorzugt zwischen 0.5 Gew.-% und 2 Gew.-%, bezogen auf die gesamte Zusammensetzung.

In einer bevorzugten Ausführungsform, die besonders gut für Cured-in-Place Gasket-Anwendungen geeignet ist, enthält die erfindungsgemässe feuchtigkeits- und radikalisch härtende Silikonacrylatzusammensetzung keinen Silanvernetzer **V.** Eine solche Zusammensetzung ist besonders lagerstabil und kann auch im ausgehärteten Zustand leicht von allen Substraten bei Bedarf wieder entfernt werden.

In der erfindungsgemässen Zusammensetzung kann in einigen Ausführungsformen ferner optional mindestens einen Kondensationskatalysator **K.** Diese dienen zur Katalyse der zwischen dem vernetzbaren Polydiorganylsiloxan und gegebenenfalls dem Vernetzer bei Anwesenheit von Feuchtigkeit bzw. Wasser stattfindenden Hydrolyse und Kondensation und somit zur Beschleunigung der Nachvernetzung.

Bei dem Kondensationskatalysator **K** kann es sich um jeden üblichen, für RTV-1 oder RTV-2 Silikone eingesetzten Katalysator handeln, wobei es sich bevorzugt um einen Metallkatalysator handelt. Metallkatalysatoren können Verbindungen oder Komplexe von Elementen der Gruppen 1, 2, 4, 12, 14 oder 15 des Periodensystems der Elemente, bevorzugt der Gruppen 4 oder 14, sein. Der Kondensationskatalysator ist bevorzugt eine zinnorganische Verbindung oder ein Titanat bzw. Organotitanat. Ganz besonders bevorzugt ist der Kondensationskatalysator eine zinnorganische Verbindung. Diese sind im Handel erhältlich. Es ist auch möglich und in gewissen Fällen sogar bevorzugt, Mischungen verschiedener Katalysatoren einzusetzen.

Bevorzugte zinnorganische Verbindungen sind Dialkylzinnverbindungen, z.B. ausgewählt aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinndistearat, Di-n-butylzinndimaleinat, Di-n-butylzinndioleat, Di-n-octylzinndi-2-ethylhexanoat, Di-n-octylzinndi-2,2-dimethyloctanoat, Di-n-octylzinndimaleinat, Di-n-octylzinndilaurat, Di-n-butylzinnoxid und Di-n-octylzinnoxid.

Geeignete zinnorganische Verbindungen können z.B. von der Firma TIB, Deutschland, kommerziell erworben werden.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei z.B. diejenigen, die ausgewählt sind aus einer Alkoxygruppe, Sulfonatgruppe, Carboxylatgruppe, Dialkylphosphatgruppe, Dialkylpyrophosphatgruppe und Acetylacetonatgruppe. Bevorzugte Titanate sind z.B. Tetrabutyl- oder Tetraisopropyltitanat. Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor^{®} AA-105, PITA, TnBT, TPT, TOT, IAM, IBAY kommerziell erhältlich von der Firma Dorf Ketal, Indien.

Die Verwendung von Kondensationskatalysator **K** führt zu einer Beschleunigung der Silan-Kondensationsreaktionen. Allerdings kann dies auf Kosten der Lagerstabilität gehen, vor allem wenn eine vollständige Trocknung der in der Zusammensetzung enthaltenen Bestandteile nicht erreicht werden kann. Für die radikalische Aushärtung spielt der Kondensationskatalysator **K** keine Rolle, und daher kann es bezüglich Lagerstabilität von Vorteil sein, keinen Kondensationskatalysator **K** einzusetzen.

Der Kondensationskatalysator **K** kann, falls vorhanden, beispielsweise in einer Menge zwischen 0.001 und 5 Gew.-%, bevorzugt 0.01 und 3 Gew.-%, bezogen auf die Zusammensetzung vorliegen.

Die erfindungsgemässe feuchtigkeits- und radikalisch härtende Silikonacrylatzusammensetzung enthält gegebenenfalls einen oder mehrere Füllstoffe **F.** Füllstoffe **F** können z.B. sowohl rheologische Eigenschaften der nicht ausgehärteten Zusammensetzung als auch die mechanischen Eigenschaften und die Oberflächenbeschaffenheit der ausgehärteten Zusammensetzung beeinflussen. Es kann von Vorteil sein, in einer Zusammensetzung verschiedene Füllstoffe einzusetzen. Allerdings ist es wichtig, dass in Fällen wo der Radikal-Initiator **I** ein Photoinitiator ist, der verwendete Füllstoff **F** das zur Aushärtung benötigte UV/VIS-Licht nicht übermässig absorbiert.

Beispiele für geeignete Füllstoffe **F** sind, insbesondere feinteilige, anorganische oder organische Füllstoffe, wie natürliche, gemahlene oder gefällte Calciumcarbonate oder Kreiden, welche gegebenenfalls oberflächenbehandelt sind, z.B. mit Fettsäuren, Kieselsäuren, insbesondere pyrogene Kieselsäuren, welche gegebenenfalls oberflächenbehandelt sind, z.B. mit Silikonölen, Aluminiumhydroxide wie Aluminiumtrihydroxid, Hohlkugeln, insbesondere aus Glas, Quarz, sowie Silicate. Wie oben erwähnt ist beim Einsatz von Füllstoffen in Zusammensetzungen, die über einen Photoinitiator als Radikal-Initiator **I** ausgehärtet werden darauf zu achten, dass der eingesetzte Füllstoff zumindest eine teilweise Transluzenz der Zusammensetzung ermöglicht, so dass die Aktivierung des Radikal-Initiators **I** nicht übermässig behindert oder gar verhindert wird. Dabei sind insbesondere Füllstoffe zu vermeiden, welche Licht oder Strahlung in der für die Aktivierung benötigten Wellenlänge in massgeblichem Ausmass absorbieren (wie beispielsweise Russ). Die reine Streuung von Licht an Füllstoffpartikeln muss nicht zwangsläufig einen Nachteil darstellen, sondern kann sogar in vorteilhafter Weise die Verfügbarkeit der aktivierenden Strahlung in der Zusammensetzung durch die Streuung verbessern.

Bevorzugtester Füllstoff **F** ist pyrogene Kieselsäure oder ein vergleichbarer Füllstoff, der beim Einmischen in die Zusammensetzung die Herstellung einer transluzenten Paste oder Flüssigkeit ermöglicht.

Die erfindungsgemässe Zusammensetzung enthält, insbesondere in Fällen wo Silanvernetzer **V** und Kondensationskatalysator **K** enthalten sind, vorzugsweise keine gefällte Kieselsäure, da diese die Lagerstabilität der Zusammensetzung beeinträchtigen kann.

Die erfindungsgemässe Zusammensetzung enthält vorzugsweise mindestens einen Füllstoff **F** mit einer Menge von zwischen 1 und 50 Gew.-%, bevorzugt zwischen 5 und 25 Gew.-%, insbesondere zwischen 7.5 und 15 Gew.-%, bezogen auf die gesamte Zusammensetzung. Bevorzugt umfasst oder besteht dieser Füllstoff **F** aus pyrogener Kieselsäure, insbesondere oberflächenbeschichtete pyrogene Kieselsäure.

Die erfindungsgemässe Zusammensetzung kann gegebenenfalls noch weitere Bestandteile enthalten, wie sie für feuchtigkeitshärtende, kondensationsvernetzende Silikonzusammensetzungen üblich sind. Derartige zusätzliche Bestandteile sind z.B. OH-terminierte Polydimethylsiloxane, Weichmacher, insbesondere Trimethylsilyl-terminierte Polydimethylsiloxane, Haftvermittler, Härtungsbeschleuniger, OH-Fänger, Trocknungsmittel, Benetzungshilfsmittel, Rheologiemodifikatoren, Thixotropierungsmittel, Verarbeitungshilfsmittel, Biozide, UV-Stabilisatoren, Hitzestabilisatoren, Flammschutzmittel, Farbpigmente, Geruchsstoffe, Antistatika, Emulgatoren.

Werden als weiterer Bestandteil OH-terminierte Polydimethylsiloxane eingesetzt, so enthalten erfindungsgemässe Silikonacrylatzusammensetzungen mindestens 90%, bevorzugt mindestens 95%, besonders bevorzugt mindestens 99% Polydimethylsiloxane **P** der allgemeinen Formel (I) bezogen auf die Summer der eingesetzten Polydimethylsiloxane **P** und der allfällig eingesetzten OH-terminierte Polydimethylsiloxane. Das Gewichts-Verhältnis von Polydimethylsiloxanen **P** der allgemeinen Formel (I) zu OH-terminierten Polydimethylsiloxanen ist demnach mindestens 9 : 1, bevorzugt mindestens 9.5 : 0.5, besonders bevorzugt mindestens 9.9 : 0.1.

Ein Beispiel für und bevorzugt als gegebenenfalls einzusetzende Weichmacher sind trialkylsilylterminierte Polydimethylsiloxane, wobei die trialkylsilylterminierten Polydimethylsiloxane bevorzugt eine Viskosität bei 23°C im Bereich von 1 bis 10'000 mPa·s aufweisen. Es können auch z.B. trimethylsilylterminierte Polydimethylsiloxane eingesetzt werden, bei denen einige der Methylgruppen durch andere organische Gruppen wie zum Beispiel Phenyl-, Vinyl- oder Trifluorpropylgruppen ersetzt sind. Das Polydimethylsiloxan kann auch monofunktionell sein, d.h. ein Ende ist reaktiv, z.B. über eine Hydroxy-Endgruppe. Bestimmte Kohlenwasserstoffe können ebenfalls als Weichmacher eingesetzt werden. Geeignete Kohlenwasserstoffe können z.B. unter dem Handelsnamen Hydroseal G3H von der Firma Total kommerziell erworben werden.

Beispiele für gegebenenfalls einzusetzende Haftvermittler sind Aminoalkohole wie Triethanolamin oder aminhaltige Polyole, die beispielsweise unter dem Handelsnamen Jeffamin^{®} kommerziell erhältlich sind.Silylgruppen-haltige Verbindungen, die hydrolysierbare Reste am Si-Atom tragen, insbesondere Aminosilane wie beispielsweise 3-Aminopropyltrimethoxysilan, werden den Vernetzern der allgemeinen Formel (IV) zugeordnet, da sie an der Vernetzungsreaktion teilnehmen können.

Es kann vorteilhaft sein, zwei oder mehrere Haftvermittler zu kombinieren.

Die gegebenfalls eingesetzten OH-Fänger sind Verbindungen, die mit gegebenfalls vorhandenen OH-Gruppen reagieren. OH-Gruppen können vorhanden sein als unverschlossene Kettenenden von Polydiorganylsiloxanen, als OH-Gruppen auf Füllstoffen und als Wasser. OH-Fänger können Si-N haltige Verbindungen sein. Beispiele für OH-Fänger sind Hexamethyldisilazan (HMDS), Hexamethylcyclotrisilazan, Octamethyltetrasilazan, Bis(trimethylsilyl)harnstoff. HMDS ist der am meisten bevorzugte OH-Fänger.

Die Bestandteile der erfindungsgemässen feuchtigkeits- und radikalisch härtende Silikonacrylatzusammensetzung können auf übliche Weise miteinander vermischt werden. Dazu werden die Einzelbestandteile in geeigneten Mischaggregaten, z.B. Zwangsmischern, Planetenmischern, Mischrohren, Knetern, Dissolvern oder Extrudern innig miteinander vermischt. Die Mischung kann kontinuierlich oder diskontinuierlich erfolgen. Dabei kann das erfindungsgemässe, vernetzbare Polydimethylsiloxan **P** der allgemeinen Formel (I) in einer vorgelagerten, räumlich getrennten Reaktion hergestellt, gegebenenfalls zwischengelagert und dann in geeigneter Menge in das Mischaggregat eindosiert werden. Alternativ ist es auch möglich, das vernetzbare Polydimethylsiloxan **P** der allgemeinen Formel (I) direkt im Mischaggregat wie weiter oben beschrieben herzustellen und die weiteren Inhaltsstoffe nach Abschluss dieser Herstellung, ohne Aufarbeitung und/oder Zwischenlagerung des Polydimethylsiloxan **P** der allgemeinen Formel (I), zuzudosieren und einzumischen.

Die erfindungsgemässe Zusammensetzung kann eine zweikomponentige Zusammensetzung sein, bestehend aus einer **Komponente A** umfassend
a) das mindestens eine vernetzbare Polydmethylsiloxan **P** der allgemeinen Formel (I)
b) optional Füllstoffe **F**
c) optional weitere Inhaltsstoffe
   und einer **Komponente B** umfassend
a) den optionalen mindestens einen Kondensationskatalysator **K**
b) optional den mindestens einen Silanvernetzer **V**
c) optional Füllstoffe **F**
d) optional weitere Inhaltsstoffe,
wobei Radikal-Initiator **I** sowie optionales (Meth)acrylatmonomer **M** in einer der beiden Komponenten A oder B oder in beiden enthalten sind, vorzugsweise in Komponente A.

Die Komponenten A und B einer solchen zweikomponentigen Zusammensetzung werden zur Lagerung getrennt voneinander aufbewahrt. Die Vermischung der Komponenten A und B kann auf übliche Weise erfolgen, z.B. durch Einrühren der Komponente B in die Komponente A, was manuell oder mithilfe einer geeigneten Rührvorrichtung, z.B. mit einem Statikmischer, Dynamikmischer, Speedmixer, Dissolver etc. erfolgen kann. Die beiden Komponenten können auch für die Applikation oder Einbringung aus den getrennten Aufbewahrungsbehältern, z.B. mit Zahnradpumpen, ausgepresst und vermischt werden. Die Vermischung kann dabei z.B. in Zufuhrleitungen oder Düsen für die Applikation oder Einbringung erfolgen oder unmittelbar auf dem Substrat oder in der Fuge erfolgen.

Die erfindungsgemässe Zusammensetzung ist jedoch bevorzugt eine einkomponentige Zusammensetzung, bei der alle Bestandteile in einer einzigen Mischung enthalten sind. Eine solche Ausführungsform benötigt keinen Mischvorgang und ist besonder anwenderfreundlich. Zudem können Mischfehler vermieden werden und eine optimal homogenisierte Mischung kann herstellerseitig sichergestellt werden.

Somit ist die erfindungsgemässe feuchtigkeits- und radikalisch härtende Silikonacrylatzusammensetzung vorzugsweise immer eine einkomponentige Zusammensetzung.

Die erfindungsgemässe Zusammensetzung kann als Klebstoff oder Dichtstoff in einem Verfahren zum Verkleben oder Verfugen von Substraten verwendet werden. Das erfindungsgemässe Verfahren umfasst
a) gegebenfalls das Einmischen der Komponente B in die Komponente A, um die gesamte Zusammensetzung zu erhalten,
b) die Applikation der Zusammensetzung auf ein Substrat und Inkontaktbringen der auf dem Substrat applizierten Zusammensetzung mit einem weiteren Substrat, um eine über die applizierte Zusammensetzung erreichte Verbindungzwischen den Substraten zu erhalten, oder das Einbringen der Zusammensetzung in eine Fuge zwischen zwei Substraten, um eine Verfugung zwischen den Substraten zu erhalten, und
c) das Härten der Zusammensetzung durch Aktivierung des Radikal-Initiators **I,**
wobei das Einmischen gemäss Schritt a) vor oder während der Applikation oder Einbringung gemäss Schritt b) durchgeführt wird.

Das allfällige Einmischen gemäss Schritt a) kann somit vor oder während der Applikation oder Einbringung gemäss Schritt b) durchgeführt wird. Die Vermischung wird bevorzugt relativ kurz vor der weiteren Verarbeitung durchgeführt. Naturgemäss entfällt Schritt a) bei Verwendung einer einkomponentigen Formulierung.

Die Applikation auf ein Substrat oder das Einbringen in eine Fuge zwischen Substraten gemäss Schritt b) kann auf übliche Weise erfolgen, z.B. von Hand oder in einem automatisierten Prozess mithilfe von Robotern. Bei Verkleben wird das mit der Zusammensetzung versehene Substrat mit einem weiteren Substrat in Kontakt gebracht, gegebenenfalls unter Druck, um eine stoffschlüssigen Kontakt der Zusammensetzung zwischen den Substraten zu erhalten. Danach lässt man in Schritt c) die Zusammensetzung härten, im Falle einer UV/VIS-Aktivierung gewöhnlich bei Raumtemperatur oder im Falle einer thermischen Aktivierung oberhalb der Aktivierungstemperatur, um die Verklebung oder Verfugung der Substrate zu erreichen. Auf diese Weise werden die erfindungsgemässen verklebten oder verfugten Substrate mit der gehärteten Zusammensetzung als Kleb- oder Dichtmaterial erhalten. Im Fall von UV/VIS-Aktivierung der radikalischen Härtung muss natürlich sichergestellt werden, dass die aktivierende Strahlung die Zusammensetzung auch grossflächig erreichen kann. Dies gelingt beispielsweise, wenn mindestens eines der Substrate transparent oder zumindest transluzent für die benötigte Lichtwellenlänge ist.

Die zu verklebenden oder verfugenden Substrate können aus dem gleichen oder aus einem verschiedenen Material sein. Es können alle üblichen Materialien mit der erfindungsgemässen Zusammensetzung verklebt oder verfugt werden. Bevorzugte Materialien zum Verkleben oder Verfugen sind Glas, Metalle, wie z.B. Aluminium, Kupfer, Stahl oder Edelstahl, Beton, Mörtel, Bausteine, wie z.B. Sandstein und Kalksandstein, Asphalt, Bitumen, Kunststoffe, wie z.B. Polyolefine, PVC, Tedlar, PET, Polyamid, Polycarbonat, Polystyrol oder Polyacrylat und Verbundwerkstoffe wie CFK.

Die erfindungsgemässe Zusammensetzung kann somit als Klebstoff oder Dichtstoff verwendet werden, z.B. in den Bereichen Bau, Sanitär, Automobil, Solartechnik, Windkrafttechnik, weisse Ware, Fassaden- und Fensterbau, Elektronik und Boots- und Schiffbau.

Besonders bevorzugt ist die Verwendung einer erfindungsgemässen Zusammensetzung als Cured-in-Place Gasket, insbesondere in der industriellen Fertigung oder im Fahrzeugbau.

Die erfindungsgemässen Zusammensetzungen eignen sich besonders für die Herstellung von Elastomerdichtungen in Cured-in-Place Gasket-Anwendungen, auch "Gasketing in Place" genannt. Bei diesem Verfahren wird eine härtbare Elastomerzusammensetzung im pastösen Zustand auf ein Substrat dosiert, um eine ungehärtete Dichtung (Gasket) mit einer gewünschten Dicke zu bilden, die dann ausgehärtet wird. Auf diese Weise wird die Dichtung direkt auf dem abzudichtenden Objekt geformt und nicht erst in einem separaten Formgebungsschritt. Ungehärtete Dichtungen werden in der Regel in Dicken von 1-15 mm, vorzugsweise in Dicken von 2-8 mm, hergestellt.

Zum Aufbringen der Dichtungen können robotergestützte Applikatoren, wie mit Applikationsdüsen ausgerüstete Industrieroboter oder 3D-Drucker, verwendet werden.

In einer besonders bevorzugten Ausführungsform stellt diese Verwendung als Cured-in-Place Gasket eine Dichtung zwischen Teilen eines Hohlkörpers, insbesondere eines Behälters und seines Deckels, bevorzugt einer Batteriebox und ihrem Deckel dar.

Ein solcher Hohlköper kann beispielsweise ein Bauteil oder eine Ummantelung einer Maschine sein oder ein Bestandteil einer Anlage zur Speicherung, Verarbeitung oder Förderung von Materialien, wie beispielsweise ein Reaktor, ein Ventil oder ein Behälter. Die erfindungsgemässe Zusammensetzung eignet sich zur Verwendung als Cured-in-Place Gasket in allen Anwendungen, wo Cured-in-Place Gasketing üblicherweise eingesetzt wird.

Dementsprechend ist ein weiterer Aspekt der Erfindung ein Verfahren zur Herstellung einer Dichtung mittels einer Cured-in-Place Gasket-Methode, umfassend die Schritte:
a) Applikation einer erfindungsgemässen Zusammensetzung auf ein Substrat oder innerhalb einer Furche eines Substrates, wobei die Applikation bevorzugt automatisiert erfolgt;
b) Optional Abdecken der applizierten Zusammensetzung mit einer transluzenten oder transparenten Folie zur Vermeidung von Luftkontakt der applizierten Zusammensetzung;
c) Aushärten der applizierten Zusammensetzung durch Aktivierung des Radikal-Initiators **I,** wobei der Radikal-Initiator bevorzugt ein UV/VISaktivierbarer Photoinitiator ist, der durch Bestrahlung mit UV/VIS-Licht aktiviert wird, gegebenenfalls unter Schutzgasatmosphäre.

Die Applikation auf ein Substrat oder das Einbringen in eine Furche eines Substrats gemäss Schritt a) kann auf übliche Weise erfolgen, z.B. von Hand oder in einem automatisierten Prozess mithilfe von Robotern oder 3D-Druckern. Danach lässt man in Schritt c) die Mischung härten, im Falle einer UV/VIS-Aktivierung gewöhnlich bei Raumtemperatur, um die Ausbildung des elasomeren Gaskets zu erreichen. Schritt b), das Abdecken der applizierten Zusammensetzung mit einer transluzenten oder transparenten Folie zur Vermeidung von Luftkontakt der applizierten Zusammensetzung, ist ein optionaler Schritt, der vorteilhaft sein kann falls die betreffende Zusammensetzung während der radikalischen Aushärtung unter Luftkontakt eine klebrige Oberfläche bildet. Temporäre Oberflächenklebrigkeit kann je nach Zusammensetzung auftreten und verschwindet im Zuge der Nachhärtung über Silankondensationsreaktionen. Um dies von Anfang an zu vermeiden, kann Schritt b) durchgeführt werden. Alternativ kann Schritt c) unter Schutzgasatmosphäre durchgeführt werden, beispielsweise in einem Stickstoffstrom, was ebenfalls die Bildung von Oberflächenklebrigkeit verhindert.

Die für dieses Verfahren geeigneten Substrate sind dieselben wie weiter oben beschrieben, insbesondere Metalle oder Legierungen, bevorzugt Aluminium oder Aluminium-Magnesiumlegierungen.

### Beispiele

Im Folgenden werden konkrete Ausführungsformen der Erfindung ausgeführt, die den Umfang der Erfindung aber nicht beschränken sollen. Die Mengenangaben in den Beispielformulierungen sind jeweils entweder in Gewichtsteilen, ausgedrückt in Gramm (g), oder in Gewichts-%, bezogen auf die jeweilige Zusammensetzung angegeben. Alle Ausprüfungen wurden bei Normklima (23°C und 50% r.h. (relative Luftfeuchtigkeit)) durchgeführt.

Die in den nachstehenden Tabellen angegebenen Mengenanteile der Bestandteile für die Silikonacrylatzusammensetzungen wurden nacheinander oder wie jeweils beschrieben eingewogen und an einem Speedmixer der Firma Hauschild bei 23°C und 50% r.h. für die jeweils angegebene Zeit (Sekunden) mit der jeweils angegebenen Drehzahl (Umdrehungen pro Minute), teilweise unter Anlegen eines Vakuums bei Unterdruck (ca. 1 mbar) gemischt. Die erhaltenen Zusammensetzungen wurden jeweils luftdicht verschlossen, bei 23°C während 24 h gelagert und anschliessend geprüft.

Zugfestigkeit, Bruchdehnung und E-Modul (Elastizitätsmodul bei 100% Dehnung) wurden nach ISO 37 an S2-Hanteln an einer Z010 Zugprüfmaschine der Firma Zwick bestimmt. Die Zusammensetzungen wurden dazu zwischen zwei transparente Kunststofffolien (Polyolefin) zu Fellen von 2 mm Dicke gepresst und wie jeweils angegeben ausgehärtet. Die gemessenen Proben zeigten im Spannungs-Dehnungs-Diagramm überraschenderweise eine praktisch lineare Korrelation mit konstanter Steigung über die gesamte Messkurve. Dies ist unüblich in Silikonzusammensetzungen und zeigt, dass keine plastische Verformung, sondern ein fast ideal elastisches Verhalten wie z.B. bei Gummi vorliegt.

Die Daten zum Druckverformungsrest, zur Untersuchung des elastischen Rückstellvermögens nach Kompression, wurden nach DIN ISO 815-1:2016-09 (Verfahren A) mit einem in der Norm definierten Werkzeug gemessen. Die zu messenden Zusammensetzungen wurden dazu zwischen zwei transparenten Polyolefinfolien zu Probekörpern von 6.33 mm Dicke gepresst und dann für 10 Sekunden mit einer Handleuchte HANDCure UV von Metabo (Emission Maximum zwischen 365 - 415 nm) bestrahlt und so aushärten gelassen.

Für die Messung des Druckverformungsrests wurde das Material anschliessend mittels des Messwerkzeugs auf 4.8 mm Dicke komprimiert (oder wie beim jeweiligen Versuch angegeben) und während 7 Tagen bei 70°C im Ofen im komprimierten Zustand gelagert. Danach wurden die Proben aus dem Werkzeug entnommen (Wegfall des Kompressionsdrucks) und während exakt 30 min bei Normklima konditioniert. Anschliessend wurde die Dicke nach Relaxion erneut gemessen und damit der Druckverformungsrest bestimmt. Die Messwerte wurden erhalten als Durchschnittswerte von sechs gleich durchgeführten Versuchen.

Die Messung der nicht erfindungsgemässen Referenzzusammensetzungen erfolgte in gleicher Art nachdem diese materialgerecht während 7 Tagen bei Normklima ausgehärtet wurden.

Bezeichnungen von und Details zu verwendeten Chemikalien können der folgenden Tabelle 1 entnommen werden.

**Tabelle 1: Verwendete Rohstoffe. Die Abkürzung «PDMS» steht für Polydimethylsiloxan.**

| Bezeichnung | Funktion | Beschreibung / Handelsname |
|---|---|---|
| AK100 | Weichmacher | Silikonweichmacher mit Trimethylsilyl-Endgruppen, Viskosität 100 mPa·s (Wacker AK 100, Wacker). |
| M124 | (Meth)acrylat-monomer **M** | Tridecylacrylat (Miramer^{®} M124, Miwon) |
| GLYMO | Silanvernetzer **V** | 3-Glycidoxypropyltrimethoxysilan (Dynasylan^{®} GLYMO, Evonik) |
| DS1146 | Silanvernetzer **V** | Oligomeres Diaminosilan (Dynasylan^{®} 1146, Evonik) |
| DS1122 | Silanvernetzer **V** | Bis(triethoxysilylpropyl)amin (Dynasylan^{®} 1122, Evonik) |
| ACR Di-100 | PDMS der Formel (III) | Lineares, difunktionelles Acrylat-terminiertes PDMS (Silmer^{®} ACR Di-100, Siltech) |
| ACRT Di-100 | PDMS der Formel (III) | Lineares, tetrafunktionelles Acrylat-terminiertes PDMS (Silmer^{®} ACRT Di-100, Siltech) |
| OH ACR Di-400 | PDMS der Formel (III) | Lineares, difunktionelles Acrylat-terminiertes PDMS (Silmer^{®} OH ACR Di-400, Siltech) |
| OH ACR Di-10 | PDMS der Formel (III) | Lineares, difunktionelles Acrylat-terminiertes PDMS (Silmer^{®} OH ACR Di-10, Siltech) |
| UB5780 | Füllstoff **F** | PDMS-gecoatete pyrogene Kieselsäure (CAB-O-SIL^{®} ULTRABOND^{™} 5780, Cabot) |
| A200 | Füllstoff **F** | Hydrophile pyrogene Kieselsäure (Aerosil^{®} 200, Evonik) |
| Omnirad | Radikal-Initiator I (UVaktivierbar) | Bis(2,4,6-trimethylbenzoyl)-phenylphosphinoxid / 2-Hydroxy-2-methyl-1- phenyl-propan-1-on (Omnirad^{®} 2022, IGM Resins) |
| TIB318 | Kondensationskatalysator **K** | Dibutylzinnoxid, Reaktionsprodukt mit Tetraethoxysilan (Katalysator 41 von Wacker Chemie AG) |

Die Herstellung der zur Synthese von Polymer P1 und Polymer P2 verwendeten Katalysatoren **C** wird in WO 2016/207156, in WO 2013/087680, sowie in WO 2015/193208 beschrieben.

### Herstellung von Polymer P1

150 g lineares, OH-terminiertes Polydimethylsiloxan mit einer Viskosität von 75'000 mPa·s (Wacker^{®} Polymer FD 80, Wacker) wurden mit 6.1 g (entspricht 6 Äquivalenten pro Si-OH Gruppe) 3-Acryloxypropyltrimethoxysilan (Dynasylan^{®} ACMO, Evonik) in einem Speedmixerbecher vermischt. Zu dieser Reaktionsmischung wurden 0.26 g 1-(2-Hydroxy-3-(3-methyldiethoxysilylpropoxy)prop-1-yl)-2-methyl-1,4,5,6-tetrahydropyrimidin (Katalysator **C** der Formel (VII)) gegeben. Die Mischung wurde für 60 Sekunden bei 1500 Umdrehungen pro Sekunde unter reduzierten Druck (-1 bar) im Speedmixer (Firma Hauschild) gemischt. Das erhaltene Polymer wurde in einen luftdichten Behälter transferiert vor Weiterverwendung für mindestens 45 Minuten gelagert bis die Endcapping-Reaktion vollständig war.

### Herstellung von Polymer P2

Dieses Polymer wurde entsprechend der Vorschrift für Polymer P1 hergestellt, mit dem Unterschied, dass als Katalysator **C** für die Herstellung 0.17 g (1,1`-(α,ω-Polyoxypropylen)-bis(2,3-diisopropylguanidin) (Katalysator **C** der Formel (VI) mit Index n von ca. 5) verwendet wurden. Das erhaltene Polymer wurde ohne Entfernung des nicht reagierten Silans in einen luftdichten Behälter transferiert vor Weiterverwendung für mindestens 15 Minuten gelagert bis die Endcapping-Reaktion vollständig war.

### Herstellung von Polymer P3

Dieses Polymer wurde entsprechend der Vorschrift für Polymer P1 hergestellt, mit dem Unterschied, dass als Katalysator **C** für die Herstellung 0.11 g 11,8-Diazabicyclo[5.4.0]undec-7-en (DBU) verwendet wurden. Das erhaltene Polymer wurde ohne Entfernung des nicht reagierten Silans in einen luftdichten Behälter transferiert vor Weiterverwendung für mindestens 45 Minuten gelagert bis die Endcapping-Reaktion vollständig war.

### Herstellung von Polymer P4

Dieses Polymer wurde entsprechend der Vorschrift für Polymer P1 hergestellt, mit dem Unterschied, dass für die Herstellung 3.1 g (entspricht 3 Äquivalenten pro Si-OH Gruppe) 3-Acryloxypropyltrimethoxysilan (Dynasylan^{®} ACMO, Evonik) verwendet wurden. Das erhaltene Polymer wurde ohne Entfernung des nicht reagierten Silans in einen luftdichten Behälter transferiert vor Weiterverwendung für mindestens 60 Minuten gelagert bis die Endcapping-Reaktion vollständig war.

### Herstellung von Polymer P5

Dieses Polymer wurde entsprechend der Vorschrift für Polymer P1 hergestellt, mit dem Unterschied, dass für die Herstellung 12.2 g (entspricht 12 Äquivalenten pro Si-OH Gruppe) 3-Acryloxypropyltrimethoxysilan (Dynasylan^{®} ACMO, Evonik) verwendet wurden. Das erhaltene Polymer wurde ohne Entfernung des nicht reagierten Silans in einen luftdichten Behälter transferiert vor Weiterverwendung für mindestens 30 Minuten gelagert bis die Endcapping-Reaktion vollständig war.

### Herstellung von Polymer P6

Dieses Polymer wurde entsprechend der Vorschrift für Polymer P1 hergestellt, mit dem Unterschied, dass für die Herstellung 120 g lineares, OH-terminiertes Polydimethylsiloxan mit einer Viskosität von 6'000 mPa·s (Wacker^{®} Polymer FD 6, Wacker) und 61 g (entspricht 6 Äquivalenten pro Si-OH Gruppe) 3-Acryloxypropyltrimethoxysilan verwendet wurden. Das erhaltene Polymer wurde ohne Entfernung des nicht reagierten Silans in einen luftdichten Behälter transferiert vor Weiterverwendung für mindestens 15 Minuten gelagert bis die Endcapping-Reaktion vollständig war.

### Herstellung von Polymer P7

Dieses Polymer wurde entsprechend der Vorschrift für Polymer P1 hergestellt, mit dem Unterschied, dass für die Herstellung 6.5 g (entspricht 6 Äquivalenten pro Si-OH Gruppe) 3-Methacryloxypropyltrimethoxysilan (Dynasylan^{®} MEMO, Evonik) verwendet wurden. Das erhaltene Polymer wurde ohne Entfernung des nicht reagierten Silans in einen luftdichten Behälter transferiert vor Weiterverwendung für mindestens 45 Minuten gelagert bis die Endcapping-Reaktion vollständig war.

### Versuche mit UV-Aktivierung

Es wurden Versuche V1 bis V3 mit UV-Aktivierung (Photoinitiator als Radikal-Initiator **I**) durchgeführt.

Dafür wurde die in Tabelle 2 angegebene Menge an Polymer P1 in einem Speedmixerbecher vorgelegt und die weiteren Bestandteile wie in Tabelle 2 angegeben hinzugefügt. Die Mischung wurde für 60 Sekunden bei 1500 Umdrehungen pro Sekunde unter reduzierten Druck im Speedmixer (Firma Hauschild) gemischt. Danach wurde die Mischung zwischen zwei transparenten Polyolefinfolien zu einerm 2mm Fell verpresst. Das Material wurde dann für 20 Sekunden mit einer UV-Handleuchte HANDCure UV von Metabo (Emission Maximum zwischen 365 - 415 nm) bestrahlt und so aushärten gelassen. Die Resultate der Messungen sind in Tabelle 2 angegeben.

**Tabelle 2: Formulierungen und Messresultate der Versuche V1 bis V3.**

| **Versuch** | **V1** | **V2** | **V3** |
|---|---|---|---|
| Polymer P1 (g) | 30 | 15 | 10 |
| M124 (g) | - | 15 | 20 |
| Omnirad (g) | 0.3 | 0.3 | 0.3 |
| A200 (g) | 2 | 2 | 2 |
| | | | |
| Zugfestigkeit (MPa) | 0.7 | 0.4 | 0.8 |
| Bruchdehnung (%) | 250 | 500 | 400 |

### Vergleich von Polydimethylsiloxanen P (UV-Härtung)

150 g des jeweiligen Polymers P wurden mit 15 g UB5780 vermischt und im Speedmixer zwei Mal während 20 Sekunden bei 2000 Umdrehungen pro Sekunde unter Normaldruck und anschliessend 60s bei 1500 Umdrehungen pro Sekunde unter reduziertem Druck vermischt. Dann wurde UV-Initiator Omnirad (1.5 g) hinzugefügt und erneut im Speedmixer während 60 Sekunden bei 1500 Umdrehungen pro Sekunde unter reduziertem Druck vermischt. Die Resultate sind in Tabelle 3 dargestellt.

**Tabelle 3: Formulierungen und Messresultate der Versuche V4 bis V8.**

| **Versuch** | **V4** | **V5** | **V6** | **V7** | **V8** |
|---|---|---|---|---|---|
| Polymer P2 (g) | 150 | - | - | - | - |
| Polymer P3 (g) | - | 150 | - | - | - |
| Polymer P4 (g) | - | - | 150 | - | - |
| Polymer P1 (g) | - | - | - | 150 | - |
| Polymer P5 (g) | - | - | - | - | 150 |
| UB5780 | 15 | 15 | 15 | 15 | 15 |
| Omnirad (g) | 1.5 | 1.5 | 1.5 | 1.5 | 1.5 |
| | | | | | |
| Zugfestigkeit (MPa) | 1.14 | 1.47 | 1.28 | 1.24 | 1.57 |
| Bruchdehnung (%) | 232 | 332 | 308 | 335 | 333 |

### Untersuchungen mit Additiven (UV-Härtung)

Die in den Tabellen 4 bis 6 jeweils angegebene Menge (in Gewichts-% bezogen auf die jeweilige Zusammensetzung) des jeweiligen Polymers P wurde mit den angegebenen Füllstoffen und Additiven vermischt und im Speedmixer zwei Mal während 20 Sekunden bei 2000 Umdrehungen pro Sekunde unter Normaldruck und anschliessend 60s bei 1500 Umdrehungen pro Sekunde unter reduziertem Druck vermischt. Dann wurde UV-Initiator Omnirad hinzugefügt und erneut im Speedmixer während 60 Sekunden bei 1500 Umdrehungen pro Sekunde unter reduziertem Druck vermischt. Die Resultate sind in Tabellen 4 bis 6 dargestellt.

**Tabelle 4: Formulierungen und Messresultate der Versuche V9 bis V16. Die Mengen (Zahlen) sind in Gewichtsprozent, bezogen auf die gesamte jeweilige Zusammensetzung. *nicht erfindungsgemässer Versuch. «n/m» bedeutet, dass die Probe zu spröde war für die Messung.**

| **Versuch** | **V9** | **V10** | **V11** | **V12** | **V13** | **V14** | **V15** | **V16*** |
|---|---|---|---|---|---|---|---|---|
| Polymer P1 | 90 | - | 64.8 | 64.3 | 64.3 | 64.3 | 64.3 | - |
| Polymer P6 | - | 64.8 | - | - | - | - | - | - |
| ACR Di-100 | - | - | - | 12.9 | - | - | - | 90 |
| ACRT Di-100 | - | - | - | - | 12.9 | - | - | - |
| OH ACR Di-400 | - | - | - | - | - | 12.9 | - | - |
| OH ACR Di-10 | - | - | - | - | - | - | 12.9 | - |
| AK100 | - | 23.6 | 23.6 | 10.3 | 10.3 | 10.3 | 10.3 | - |
| UB5780 | 9 | 10.7 | 10.7 | 11.6 | 11.6 | 11.6 | 11.6 | 9 |
| Omnirad | 1 | 0.9 | 0.9 | 1 | 1 | 1 | 1 | 1 |
| | | | | | | | | |
| Zugfestigkeit (MPa) | 1.24 | 0.91 | 1.44 | 1.9 | 2.18 | 1.75 | 1.44 | n/m |
| Bruchdehnung (%) | 335 | 267 | 383 | 239 | 277 | 347 | 260 | n/m |

**Tabelle 5: Formulierungen und Messresultate der Versuche V9, V13 und V17 bis V19. Die Mengen (Zahlen) sind in Gewichtsprozent, bezogen auf die gesamte jeweilige Zusammensetzung.**

| **Versuch** | **V13** | **V17** | **V18** | **V19** | **V9** |
|---|---|---|---|---|---|
| Polymer P1 | 64.3 | 70.1 | 76.7 | 83.3 | 90 |
| ACRT Di-100 | 12.9 | 19.9 | 13.3 | 6.7 | - |
| AK100 | 10.3 | - | - | - | - |
| UB5780 | 11.6 | 9 | 9 | 9 | 9 |
| Omnirad | 1 | 1 | 1 | 1 | 1 |
| | | | | | |
| Zugfestigkeit (MPa) | 2.18 | 1.85 | 1.49 | 1.39 | 1.24 |
| Bruchdehnung (%) | 277 | 193 | 196 | 269 | 335 |

**Tabelle 6: Formulierungen und Messresultate der Versuche V9 und V20 bis V22. Die Mengen (Zahlen) sind in Gewichtsprozent, bezogen auf die gesamte jeweilige Zusammensetzung.**

| **Versuch** | **V9** | **V20** | **V21** | **V22** |
|---|---|---|---|---|
| Polymer P1 | 90 | 89 | 89 | 89 |
| GLYMO | - | 1 | - | - |
| DS1146 | - | - | 0.9 | - |
| DS1122 | - | - | - | 0.9 |
| TIB318 | - | - | 0.1 | 0.1 |
| UB5780 | 9 | 9 | 9 | 9 |
| Omnirad | 1 | 1 | 1 | 1 |
| | | | | |
| Zugfestigkeit (MPa) | 1.24 | 1.43 | 1.34 | 1.47 |
| Bruchdehnung (%) | 335 | 318 | 334 | 377 |

Aus den Ergebnissen der vorstehenden Tabellen 2 bis 6 wird ersichtlich, dass erfindungsgemässe Zusammensetzungen insbesondere mit UV/VIS-Aktivierung sehr schnell zu mechanisch als Cured-in-Place Gasket hervorragenden Materialien aushärten.

### Untersuchungen zu thermischer Alterung und Warmwasserstabilität

Um die mechanische Stabilität der ausgehärteten erfindungsgemässen Zusammensetzung unter Wärme- oder Warmwassereinfluss zu untersuchen wurden Proben der Zusammensetzung aus Versuch V17 (Tabelle 5) nach Aushärtung (60 Sekunden Bestrahlung mit einer UV-Handleuchte HANDCure UV von Metabo (Emission Maximum zwischen 365 - 415 nm)) einer Wärme-, bzw. Warmwasserlagerung unterworfen. Die Wärmelagerung bestand aus 10 Tagen Lagerung im Ofen (70°C) und die Warmwasserlagerung aus 14 Tagen Lagerung unter Wasser (55°C). Nach der jeweiligen Lagerung wurde jeweilige Zusammensetzung während 24 h bei Normklima gelagert und anschliessend hinsichtlich ihrer mechanischen Eigenschaften untersucht. Die Ergebnisse mit den Angaben zur jeweiligen Lagerung sind in Tabelle 7 dargestellt.

**Tabelle 7: Messungen zur mechanischen Stabilität der Zusammensetzung V17 nach Normklima-, Wärme- und Warmwasserlagerung.**

| **Versuch V17** | *Zugfestigkeit* | *Bruchdehnung* | *E-Modul bei 100* % |
|---|---|---|---|
| Lagerung | *[MPa]* | *[%]* | *[MPa]* |
| 24h bei Normklima (23°C/50%r.h.) | 1.85 | 193 | 0.87 |
| 24h Normklima + 10d 70°C | 1.65 | 151 | 1.02 |
| 24h Normklima + 14d H₂O (55°C) | 1.40 | 130 | 1.05 |

Die Daten aus Tabelle 7 zeigen, dass die Zusammensetzung unter Wärme- und/oder Wassereinfluss eine Nachhärtung erfährt, durch Kondensationsreaktionen der feuchtigkeitsreaktiven Silangruppen die in der Zusammensetzung vorhanden sind. Dies macht sich in einer leichten Erhöhung des E-Moduls bemerkbar. Lagerung unter Warmwasser führt überraschenderweise nicht zu einer Degradation des Materials und der E-Modul bliebt in allen Fällen in einem Bereich, der für Cured-in-Place Gasket Materialien geeignet ist.

### Untersuchungen zu Druckverformungsrest und elastischem Rückstellvermögen nach Kompression

Für diese Untersuchung wurden Proben der Zusammensetzung aus Versuch V17 (Tabelle 5) nach Aushärtung (10 Sekunden Bestrahlung mit einer UV-Handleuchte HANDCure UV von Metabo (Emission Maximum zwischen 365 - 415 nm)) mittels dem oben beschriebenen Verfahren nach DIN ISO 815-1:2016-09 getestet.

Zudem wurden noch folgende kommerziell erhältliche Zusammensetzungen als Referenzvergleiche auf dieselbe Weise mitgeprüft:
**V23:** Sikaflex^{®}-223 (erhältlich von Sika Schweiz), ein niedermoduliger, einkomponentiger Polyurethan-Kleb- und Dichtstoff für Innen- und Aussenanwendungen. Sikaflex-233 wurde mit einer wasserhaltigen Boosterpaste (SikaBooster^{®} P-50; erhältlich von Sika Schweiz) beschleunigt ausgehärtet. Die Applikation und Aushärtung erfolgte bei Normklima entsprechend der Vorschrift des technischen Datenblattes. Das Verfahren nach DIN ISO 815-1:2016-09 wurde in gleicher Weise wie für die erfindungsgemässe Zusammensetzung durchgeführt, wobei jedoch mittels des Messerkzeugs auf 4.7 mm Dicke komprimiert und während 7 Tagen bei 70°C im Ofen im komprimierten Zustand gelagert wurde. Die übrige Messdurchführung war identisch wie für V17.

**V24:** Sikasil^{®} WT-66 PowerCure (erhältlich von Sika Schweiz), ein beschleunigter, einkomponentiger Silikonklebstoff, der über Silankondensation aushärtet. Die Applikation und Aushärtung erfolgte bei Normklima entsprechend der Vorschrift des technischen Datenblattes. Das Verfahren nach DIN ISO 815-1:2016-09 wurde in gleicher Weise wie für die erfindungsgemässe Zusammensetzung durchgeführt, wobei jedoch mittels des Messerkzeugs auf 4.7 mm Dicke komprimiert und während 7 Tagen bei 23°C im komprimierten Zustand gelagert wurde. Die übrige Messdurchführung war identisch wie für V17.

Die Ergebnisse sind in Tabelle 8 dargestellt.

**Tabelle 8: Ergebnisse zum Druckverformungsrest nach DIN ISO 815-1:2016-09 der Zusammensetzung V17 und vergleichender Referenzzusammensetzungen V23 und V24. *nicht erfindungsgemässer Versuch.**

| **Versuch** | **V17** | **V23*** | **V24*** |
|---|---|---|---|
| Höhe der ausgehärteten Probe vor Kompression [mm] | 6.33 | 6.33 | 6.19 |
| Höhe der ausgehärteten Probe nach Kompression und Relaxation [mm] | 5.69 | 5.35 | 5.03 |
| Druckverformungsrest [%] | 39 | 60.1 | 77.8 |

Die Ergebnisse der Tabelle 8 zeigen, dass die erfindungsgemässe Zusammensetzung ein aussergewöhnlich hohes Rückstellvermögen nach elastischer Deformation (Kompression) aufweist und bezüglich dieser Eigenschaften ansonsten mechanisch vergleichbaren, niedermoduligen Zusammensetzungen auf Basis von Polyurethanen oder kondenssationsvernetzenden Silikonen deutlich überlegen ist.

## Patentansprüche

1. Feuchtigkeits- und radikalisch härtende Silikonacrylatzusammensetzung umfassend
a) mindestens ein feuchtigkeits- und radikalisch vernetzbares Polydimethylsiloxan **P** der allgemeinen Formel (I) 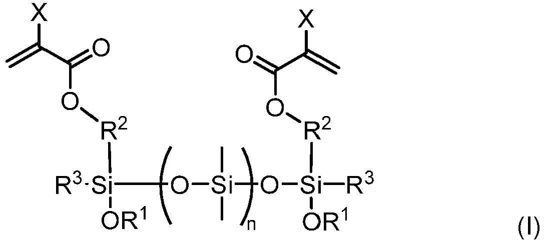 wobei R¹ unabhängig voneinander für Wasserstoff oder monovalente Kohlenwasserstoffgruppen mit 1-6 C-Atomen stehen; R² unabhängig voneinander für eine divalente Kohlenwasserstoffgruppe mit 1-6 C-Atomen stehen; R³ unabhängig voneinander für OR¹ oder Methyl stehen; X ein Wasserstoff oder eine Methylgruppe darstellt; und n so gewählt ist, dass das vernetzbare Polydiorganylsiloxan bei einer Temperatur von 25°C eine Viskosität von 10 bis 500'000 mPa·s besitzt,
b) mindestens einen Radikal-Initiator **I,**
c) optional mindestens ein (Meth)acrylatmonomer **M,**
d) optional mindestens einen Silanvernetzer **V** mit Alkoxysilangruppen,
e) optional mindestens einen Kondensationskatalysator **K,**
f) optional Füllstoffe **F,**
g) optional weitere Inhaltsstoffe,
**dadurch gekennzeichnet, dass** Polydimethylsiloxan **P** hergestellt ist aus der Kondensationsreaktion eines Polydimethylsiloxans mit Silanol-Endgruppen und mehr als zwei Äquivalenten Silan der Formel (II), bezogen auf die Silanol-Endgruppen, 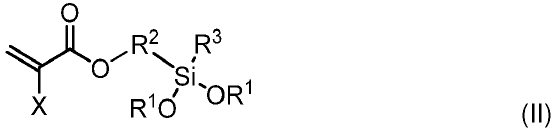 mit der Massgabe, dass für die Kondensationsreaktion zur Herstellung des Polydimethylsiloxans **P** ein Katalysator **C** verwendet wird, welcher ausgewählt ist aus Amidin- und Guanidinverbindungen.

2. Feuchtigkeits- und radikalisch härtende Silikonacrylatzusammensetzung gemäss Anspruch 1, **dadurch gekennzeichnet, dass** Katalysator **C** eine Guanidinverbindung, insbesondere ein Polyetherpolymer mit Guanidin-Endgruppen oder ein Polydimethylsiloxan mit Guanidinendgruppen ist.

3. Feuchtigkeits- und radikalisch härtende Silikonacrylatzusammensetzung gemäss einem der Ansprüche 1 oder 2, **dadurch gekennzeichnet, dass** der Radikal-Initiator **I** ein UV/VIS-aktivierbarer Photoinitiator ist.

4. Feuchtigkeits- und radikalisch härtende Silikonacrylatzusammensetzung gemäss Anspruch 3, **dadurch gekennzeichnet, dass** der Radikal-Initiator **I** ein Acylphosphinoxid, bevorzugt Bis(2,4,6-trimethylbenzoyl)-phenylphosphinoxid umfasst.

5. Feuchtigkeits- und radikalisch härtende Silikonacrylatzusammensetzung gemäss einem der Ansprüche 1 bis 4, **dadurch gekennzeichnet, dass** die Zusammensetzung zusätzlich ein Polydimethylsiloxan der Formel (III) enthält, 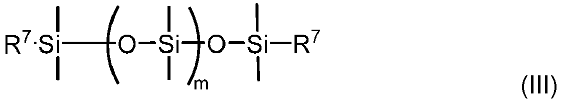 wobei R⁷ ausgewählt ist aus C6 bis C20 Alkylresten mit optional mindestens einem Ethersauerstoff in der Kette, die optional eine Hydroxylgruppe aufweist und mindestens eine Acrylatgruppe am Kettenende trägt, wobei m so gewählt ist, dass das Polydimethylsiloxan nach Formel (III) bei einer Temperatur von 25°C eine Viskosität von 25 bis 2`500 mPa·s besitzt.

6. Feuchtigkeits- und radikalisch härtende Silikonacrylatzusammensetzung gemäss einem der vorhergehenden Ansprüche, **dadurch gekennzeichnet, dass** die Zusammensetzung einen Kondensationskatalysator **K** enthält, welcher eine Verbindung eines Elementes der Gruppen 1, 2, 4, 12, 14 oder 15 des Periodensystems der Elemente ist, bevorzugt eine Verbindung der Gruppen 4 oder 14, besonders bevorzugt von Titan oder Zinn, ganz besonders bevorzugt eine zinnorganische Verbindung, ist.

7. Feuchtigkeits- und radikalisch härtende Silikonacrylatzusammensetzung gemäss einem der vorhergehenden Ansprüche, **dadurch gekennzeichnet, dass** die Zusammensetzung mindestens einen Silanvernetzer **V** mit Alkoxysilangruppen enthält, der ausgewählt ist aus Verbindungen der allgemeinen Formel (IV)
R⁴ₘSiY₄₋ₘ (IV)
wobei R⁴ unabhängig voneinander ein nicht hydrolysierbarer einwertiger Kohlenwasserstoffrest mit 1 - 18 C-Atomen, welcher gesättigt oder ungesättigt ist und gegebenenfalls eine oder mehrere funktionelle Gruppen enthaltend die Elemente N,P,O und/oder S aufweist, ist, m gleich 0, 1, 2 oder 3 ist, Y unabhängig voneinander eine OH-Gruppe, eine lineare oder verzweigte Alkoxygruppe mit 1 - 8 C-Atomen oder eine Gruppe der allgemeinen Formel V ist
N(SiR⁴ₘ)ₒ(R⁵)ₚ(R⁶)_{q} (V)
wobei R⁴ und m die oben angegebene Bedeutungen haben, R⁵ ein Wasserstoffatom oder eine monovalente Kohlenwasserstoffgruppe mit 1-8 C-Atomen und R⁶ eine Acylgruppe mit 1-9 C-Atomen ist, und o, p, q gleich 0, 1 oder 2 sind, mit der Massgabe, dass o + p + q = 2.

8. Feuchtigkeits- und radikalisch härtende Silikonacrylatzusammensetzung gemäss Anspruch 7, **dadurch gekennzeichnet, dass** der mindestens eine Vernetzer ausgewählt ist aus Hydrolyse- und/oder Kondensationsprodukten von Verbindungen der allgemeinen Formel (IV).

9. Feuchtigkeits- und radikalisch härtende Silikonacrylatzusammensetzung gemäss einem der vorhergehenden Ansprüche, **dadurch gekennzeichnet, dass** die Zusammensetzung mindestens einen Füllstoff **F** enthält, der ausgewählt ist aus natürlichen, gemahlenen oder gefällten Calciumcarbonate oder Kreiden, Kieselsäuren, insbesondere pyrogenen Kieselsäuren, Aluminiumhydroxide, Hohlkugeln, insbesondere aus Glas, Quarz, sowie Silicaten, wobei die Füllstoffe gegebenenfalls oberflächenmodifiziert, bevorzugt hydrophobiert sind.

10. Feuchtigkeits- und radikalisch härtende Silikonacrylatzusammensetzung gemäss einem der vorhergehenden Ansprüche, **dadurch gekennzeichnet, dass** als weitere Inhaltsstoffe OH-terminierte Polydimethylsiloxane, Weichmacher, insbesondere Trimethylsilylterminierte Polydimethylsiloxane, Haftvermittler, Härtungsbeschleuniger, OH-Fänger, Trocknungsmittel, Benetzungshilfsmittel, Rheologiemodifikatoren, Thixotropierungsmittel, Verarbeitungshilfsmittel, Biozide, UV-Stabilisatoren, Hitzestabilisatoren, Flammschutzmittel, Farbpigmente, Geruchsstoffe, Antistatika und/oder Emulgatoren enthalten sind.

11. Feuchtigkeits- und radikalisch härtende Silikonacrylatzusammensetzung gemäss einem der vorhergehenden Ansprüche, **dadurch gekennzeichnet, dass** bei der Herstellung von Polymer **P** mehr als 3 Äquivalente, bevorzugt zwischen 4 und 12 Äquivalente des Silans nach Formel (II) bezogen auf die Silanol-Endgruppen eingesetzt werden, wobei das nicht umgesetzte, überschüssige Silan nach Formel (II) nach der Umsetzung bevorzugt als Silanvernetzter **V** in der Zusammensetzung verbleibt.

12. Feuchtigkeits- und radikalisch härtende Silikonacrylatzusammensetzung gemäss einem der vorhergehenden Ansprüche, **dadurch gekennzeichnet, dass** die Zusammensetzung eine einkomponentige Silikonacrylatzusammensetzung ist.

13. Verwendung einer Feuchtigkeits- und radikalisch härtenden Silikonacrylatzusammensetzung gemäss einem der vorhergehenden Ansprüche als Cured-in-Place Gasket, insbesondere in der industriellen Fertigung oder im Fahrzeugbau.

14. Verwendung nach Anspruch 13, **dadurch gekennzeichnet, dass** der Cured-in-Place Gasket eine Dichtung zwischen Teilen eines Hohlkörpers, insbesondere eines Behälters und seines Deckels, bevorzugt einer Batteriebox und ihrem Deckel darstellt.

15. Verfahren zur Herstellung einer Dichtung mittels einer Cured-in-Place Gasket-Methode, umfassend die Schritte:
a) Applikation einer feuchtigkeits- und radikalisch härtenden Silikonacrylatzusammensetzung gemäss einem der Ansprüche 1 bis 12 auf ein Substrat oder innerhalb einer Furche eines Substrates, wobei die Applikation bevorzugt automatisiert erfolgt;
b) Optional Abdecken der applizierten Zusammensetzung mit einer transluzenten oder transparenten Folie zur Vermeidung von Luftkontakt der applizierten Zusammensetzung;
c) Aushärten der applizierten Zusammensetzung durch Aktivierung des Radikal-Initiators **I,** wobei der Radikal-Initiator bevorzugt ein UV/VISaktivierbarer Photoinitiator ist, der durch Bestrahlung mit UV/VIS-Licht aktiviert wird, gegebenenfalls unter Schutzgasatmosphäre.
